# EUROPEAN PATENT APPLICATION

(11) **EP 3 171 643 A1**
(43) Date of publication of application: **24.05.2017**
(21) Application number: 14899930.3
(22) Date of filing: 22.08.2014
(51) Int. Cl.: H04W 48/18

(54) **METHOD, DEVICE AND SYSTEM FOR ACTIVATING PDP/PDN CONTEXT**

(71) Applicant: Huawei Technologies Co. Ltd., Shenzhen, Guangdong 518129 (CN)
(72) Inventor: SHI, Yingsheng, Shenzhen Guangdong 518129 (CN); CHEN, Jing, Shenzhen Guangdong 518129 (CN)
(74) Representative: Thun, Clemens
(86) International application number: PCT/CN2014/085016
(87) International publication number: WO 2016/026138

(57) **Abstract**

The present invention provides a PDP/PDN context activation method, a device, and a system. A method for selecting subscription information used to activate a PDP/PDN context is improved to use subscription information that includes different APNs when the PDP/PDN context is activated for multiple times, so as to resolve a problem that a service type applied by a user is excessively undiversified due to repeat use of an APN, thereby expanding a scope of a service type available to the user, and improving an activation success rate and user satisfaction.

## Description

### TECHNICAL FIELD

The present invention relates to the communications field, and specifically, to a PDP/PDN context activation method, a device, and a system.

### BACKGROUND

In a GPRS (General Packet Radio Service, general packet radio service) packet domain core network or an EPS (Evolved Packet System, evolved packet system) network, a control node such as an SGSN (Serving GPRS Support Node, serving GPRS support node) or an MME (Mobility Management Entity, mobility management entity) mainly accomplishes functions such as routing and forwarding of a data packet, encryption and authentication, session management, mobility management, logical link management, or generation and output of a call detail record. To implement functions of routing and forwarding of service data between an MS (Mobile Station, mobile station) user and a GGSN (Gate GPRS Support Node, gateway GPRS support node) or a P-GW (PDN gateway, PDN gateway), the control node needs to perform an operation such as PDP (Packet Data Protocol Context, packet data protocol context)/PDN (Packet Data Networks, packet data network) activation.

When the MS user is attached to the control node, the control node obtains subscription information of the MS user by using a server such as an HLR/HSS (Home Location Register/Home Subscriber Server, home location register/home subscriber server). The MS user can transmit service data only after the control node activates the PDP/PDN context according to the subscription information.

That the control node activates the PDP/PDN context is mainly selecting, according to data such as a PDP type, a PDP address, and an APN (Access Point Name, access point name) that are carried in an activation request message sent by the MS user, subscription information used for activation to complete operations of activating the PDP/PDN context. The control node needs to obtain, from the server, all subscription information of the MS user; performs screening on the subscription information according to a requirement, in the activation request message, proposed by the MS user for the PDP type, the PDP address, and the APN; when only one group of non-wildcard subscription information that meets the requirement exists, selects the subscription information for activation; when at least two groups of non-wildcard subscription information that meets the requirement exist, and subscription information that includes a default APN exists in the at least two groups of non-wildcard subscription information, selects, for activation, a group of subscription information that includes the default APN; when subscription information that meets the requirement is only wildcard subscription information, invokes a locally configured local APN used by the MS user for activation with reference to the wildcard subscription information; after screening, when the subscription information that meets the requirement does not exist, preferentially invokes non-wildcard subscription information consistent with the local APN; and if the non-wildcard subscription information consistent with the local APN does not exist, invokes, for activation, subscription information prespecified in non-wildcard subscription information provided by the server.

In the prior art, when the MS user subscribes to the server, a maximum of one APN can be specified as a default APN. Therefore, the control node can select, for activation, subscription information that includes the default APN only from multiple groups of data that meets a requirement. No matter how many times the MS user sends an activation request, only a service corresponding to the default APN can be repeatedly used after activation. In this scenario, a service type that can be applied by the MS user is excessively undiversified. In addition, the local control node configures only one local APN for the MS user. When a local APN needs to be used for activation, the MS user can use only a service corresponding to the local APN, which also causes a problem of an excessively undiversified service type that can be applied by the MS user. Furthermore, in a scenario in which subscription information that meets a requirement does not exist, non-wildcard subscription information consistent with the local APN or subscription information prespecified is preferentially used, which also causes a problem of an excessively undiversified service type that can be applied by the MS user.

### SUMMARY

To eliminate or overcome at least one of the foregoing technical disadvantages, a first aspect of embodiments of this application provides a control node, including:
an obtaining module, configured to obtain at least one group of subscription information of a user;
a first activation module, configured to: when subscription information that meets a matching requirement does not exist, preferentially select a group of subscription information that includes an unused default access point name default APN from the at least one group of subscription information of the user, to activate a packet data protocol PDP/packet data network PDN context;
a second activation module, configured to: when at least two groups of non-wildcard subscription information that meets the matching requirement exist, preferentially select a group of subscription information that includes an unused default APN from the at least two groups of non-wildcard subscription information that meets the matching requirement, to activate the PDP/PDN context; and
a third activation module, configured to: when only wildcard subscription information that meets the matching requirement exists, select one unused local APN from at least one local APN, to activate the PDP/PDN context with reference to the wildcard subscription information.

With reference to the first aspect, in a first possible implementation manner, the control node further includes:
an adding module, configured to: extract subscription information that includes a default APN from the at least one group of subscription information of the user, and add the subscription information that includes the default APN to a default APN subscription information queue, where
the adding module is further configured to: extract subscription information consistent with the at least one local APN from subscription information remaining after the extraction of the subscription information that includes the default APN, and add the subscription information consistent with the at least one local APN to a local APN subscription information queue; and
the adding module is further configured to add, to an other APN subscription information queue, non-wildcard subscription information remaining after the extraction of the subscription information consistent with the at least one local APN.

With reference to the first possible implementation manner of the first aspect, in a second possible implementation manner, the default APN subscription information queue includes at least first default APN subscription information and second default APN subscription information, and a priority of the first default APN is higher than a priority of the second default APN; and
the first activation module includes:
   a first query unit, configured to query whether the default APN in the first default APN subscription information exists in a list of used default APNs, where
   the first query unit is further configured to: when finding that the default APN in the first default APN subscription information exists in the list of used default APNs, query whether the default APN in the second default APN subscription information exists in the list of used default APNs; and
   the first query unit is further configured to: when finding that the default APN in the second default APN subscription information does not exist in the list of used default APNs, send a first selection prompt message to a first selection unit;
   the first selection unit, configured to: after receiving the first selection prompt message, preferentially select the second default APN subscription information as subscription information used to activate the PDP/PDN context;
   a first activation unit, configured to activate the PDP/PDN context according to the second default APN subscription information; and
   a first adding unit, configured to add the default APN in the second default APN subscription information to the list of used default APNs.

With reference to the second possible implementation manner of the first aspect, in a third possible implementation manner, the first activation module is further configured to: when the subscription information that includes the unused default APN does not exist in the at least one group of subscription information of the user, select a piece of subscription information consistent with the unused local APN from the local APN subscription information queue, to activate the PDP/PDN context. With reference to the third possible implementation manner of the first aspect, in a fourth possible implementation manner, the local APN subscription information queue includes at least first local APN subscription information and second local APN subscription information, and a priority of the first local APN is higher than a priority of the second local APN; and
the first activation module includes:
a second query unit, configured to query whether the local APN in the first local APN subscription information exists in a first list of used local APNs, where
the second query unit is further configured to: when finding that the local APN in the first local APN subscription information exists in the first list of used local APNs, query whether the local APN in the second local APN subscription information exists in the first list of used local APNs; and
the second query unit is further configured to: when finding that the local APN in the second local APN subscription information does not exist in the first list of used local APNs, send a second selection prompt message to a second selection unit;
the second selection unit, configured to: after receiving the second selection prompt message, select the second local APN subscription information as subscription information used to activate the PDP/PDN context;
a second activation unit, configured to activate the PDP/PDN context according to the second local APN subscription information; and
a second adding unit, configured to add the local APN in the second local APN subscription information to the first list of used local APNs.

With reference to the third possible implementation manner of the first aspect, in a fifth possible implementation manner, the first activation module is further configured to: when the subscription information consistent with the unused local APN does not exist, select a group of subscription information that includes an unused other APN from the other APN subscription information queue, to activate the PDP/PDN context. With reference to the fifth possible implementation manner of the first aspect, in a sixth possible implementation manner, the other APN subscription information queue includes at least first other APN subscription information and second other APN subscription information, and a priority of the first other APN is higher than a priority of the second other APN; and
the first activation module includes:
   a third query unit, configured to query whether the other APN in the first other APN subscription information exists in a list of used other APNs, where
   the third query unit is further configured to: when finding that the other APN in the first other APN subscription information exists in the list of used other APNs, query whether the other APN in the second other APN subscription information exists in the list of used other APNs; and
   the third query unit is further configured to: when finding that the other APN in the second other APN subscription information does not exist in the list of used other APNs, send a third selection prompt message to a third selection unit;
   the third selection unit, configured to: after receiving the third selection prompt message, select the second other APN subscription information as subscription information used to activate the PDP/PDN context;
   a third activation unit, configured to activate the PDP/PDN context according to the second other APN subscription information; and
   a third adding unit, configured to add the other APN in the second other APN subscription information to the list of used other APNs.

With reference to the first aspect, in a seventh possible implementation manner, the obtaining module includes:
a sending unit, configured to send a subscription information request to a server; and
a receiving unit, configured to receive at least two groups of subscription information of the user that are sent by the server, where a default APN in any subscription information in the at least two groups of subscription information of the user is different from a default APN in other subscription information.

With reference to the first possible implementation manner of the first aspect, in an eighth possible implementation manner, the matching requirement includes one or more of a PDP type or a PDP address;
the second activation module is further configured to: when the subscription information that includes the unused default APN does not exist in the at least two groups of non-wildcard subscription information that meets matching requirement, select a piece of subscription information consistent with the unused local APN from the at least one group of subscription information of the user, to activate the PDP/PDN context; and
the second activation module is further configured to: when the subscription information consistent with the unused local APN does not exist, select a group of subscription information that includes an unused other APN from the at least one group of subscription information of the user, to activate the PDP/PDN context. With reference to the first aspect, in a ninth possible implementation manner, the at least one local APN includes at least a first local APN and a second local APN, and a priority of the first local APN is higher than a priority of the second local APN; and
the third activation module includes:
   a fourth query unit, configured to query whether the first local APN exists in a second list of used local APNs, where
   the fourth query unit is further configured to: when finding that the first local APN exists in the second list of used local APNs, query whether the second local APN exists in the second list of used local APNs; and
   the fourth query unit is further configured to: when finding that the second local APN does not exist in the second list of used local APNs, send a fourth selection prompt message to a fourth selection unit;
   the fourth selection unit, configured to: after receiving the fourth selection prompt message, preferentially select the second local APN as an APN used to activate the PDP/PDN context with reference to the wildcard subscription information;
   a fourth activation unit, configured to activate the PDP/PDN context based on the second local APN with reference to the wildcard subscription information; and
   a fourth adding unit, configured to add the second local APN to the second list of used local APNs.

With reference to the first possible implementation manner of the first aspect, in a tenth possible implementation manner, an APN type includes a default APN, a local APN, and an other APN, and the control node further includes:
a determining module, configured to: when a unique group of non-wildcard subscription information that meets the matching requirement exists, determine whether an APN included in the unique group of non-wildcard subscription information that meets the matching requirement is used, and when determining that the APN included in the unique group of non-wildcard subscription information that meets the matching requirement is used, send a reselection prompt message to a fourth activation module; and
the fourth activation module, configured to: after receiving the reselection prompt message sent by the determining module, preferentially select the group of subscription information that includes the unused default APN from the at least one group of subscription information of the user, to activate the PDP/PDN context, where
the fourth activation module is further configured to: when the subscription information that includes the unused default APN does not exist in the at least one group of subscription information of the user, select a piece of subscription information consistent with the unused local APN from the at least one group of subscription information of the user, to activate the PDP/PDN context;
the fourth activation module is further configured to: when the subscription information consistent with the unused local APN does not exist in the at least one group of subscription information of the user, select a group of subscription information that includes an unused other APN from the at least one group of subscription information of the user, to activate the PDP/PDN context; and
the fourth activation module is further configured to: when the subscription information that includes the unused other APN does not exist in the at least one group of subscription information of the user, activate the PDP/PDN context based on the unique group of non-wildcard subscription information that meets the matching requirement.

According to a second aspect, an embodiment of the present invention provides a server, including:
a receiving module, configured to receive a subscription information request sent by a control node;
a searching module, configured to search, according to the subscription information request, for at least two groups of subscription information of a user that are subscribed to by the user, where default access point names default APNs included in the at least two groups of subscription information of the user are different from each other; and
a sending module, configured to send the at least two groups of subscription information of the user to the control node.

With reference to the second aspect, in a first possible implementation manner, the server further includes:
the receiving module, further configured to receive a subscription request of the user, where the subscription request carries specified information of at least two default APNs that are different from each other; and
a generation module, configured to generate the at least two groups of subscription information of the user according to the specified information, where a default APN in any subscription information in the at least two groups of subscription information of the user is different from a default APN in other subscription information.

According to a third aspect, an embodiment of the present invention provides a PDP/PDN context activation method, including:
obtaining at least one group of subscription information of a user;
preferentially selecting, when subscription information that meets a matching requirement does not exist, a group of subscription information that includes an unused default access point name default APN from the at least one group of subscription information of the user, to activate a packet data protocol PDP/packet data network PDN context;
when at least two groups of non-wildcard subscription information that meets the matching requirement exist, preferentially selecting a group of subscription information that includes an unused default APN from the at least two groups of non-wildcard subscription information that meets the matching requirement, to activate the PDP/PDN context; and
when only wildcard subscription information that meets the matching requirement exists, selecting one unused local APN from at least one local APN, to activate the PDP/PDN context with reference to the wildcard subscription information.

With reference to the third aspect, in a first possible implementation manner, after the obtaining at least one group of subscription information of a user, the method further includes any one of the following steps:
extracting subscription information that includes a default APN from the at least one group of subscription information of the user, and adding the subscription information that includes the default APN to a default APN subscription information queue;
extracting subscription information consistent with the at least one local APN from subscription information remaining after the extraction of the subscription information that includes the default APN, and adding the subscription information consistent with the at least one local APN to a local APN subscription information queue; and
adding, to an other APN subscription information queue, non-wildcard subscription information remaining after the extraction of the subscription information consistent with the at least one local APN.

With reference to the first possible implementation manner of the third aspect, in a second possible implementation manner, the default APN subscription information queue includes at least first default APN subscription information and second default APN subscription information, and a priority of the first default APN is higher than a priority of the second default APN; and
the preferentially selecting, when subscription information that meets a matching requirement does not exist, a group of subscription information that includes an unused default access point name default APN from the at least one group of subscription information of the user, to activate a packet data protocol PDP/PDN context includes:
   querying whether the default APN in the first default APN subscription information exists in a list of used default APNs;
   when it is found that the default APN in the first default APN subscription information exists in the list of used default APNs, querying whether the default APN in the second default APN subscription information exists in the list of used default APNs;
   when it is found that the default APN in the second default APN subscription information does not exist in the list of used default APNs, preferentially selecting the second default APN subscription information as subscription information used to activate the PDP/PDN context;
   activating the PDP/PDN context according to the second default APN subscription information; and
   adding the default APN in the second default APN subscription information to the list of used default APNs.

With reference to the second possible implementation manner of the third aspect, in a third possible implementation manner, after the preferentially selecting a group of subscription information that includes an unused default access point name default APN from the at least one group of subscription information of the user, to activate a packet data protocol PDP/PDN context, the method further includes:
when the subscription information that includes the unused default APN does not exist in the at least one group of subscription information of the user, selecting a piece of subscription information consistent with the unused local APN from the local APN subscription information queue, to activate the PDP/PDN context. With reference to the third possible implementation manner of the third aspect, in a fourth possible implementation manner, the local APN subscription information queue includes at least first local APN subscription information and second local APN subscription information, and a priority of the first local APN is higher than a priority of the second local APN; and
the selecting subscription information consistent with the unused local APN, to activate the PDP/PDN context includes:
   querying whether the local APN in the first local APN subscription information exists in a first list of used local APNs;
   when it is found that the local APN in the first local APN subscription information exists in the first list of used local APNs, querying whether the local APN in the second local APN subscription information exists in the first list of used local APNs;
   when it is found that the local APN in the second local APN subscription information does not exist in the first list of used local APNs, selecting the second local APN subscription information as subscription information used to activate the PDP/PDN context;
   activating the PDP/PDN context according to the second local APN subscription information; and
   adding the local APN in the second local APN subscription information to the first list of used local APNs.

With reference to the third possible implementation manner of the third aspect, in a fifth possible implementation manner, after the selecting a piece of subscription information consistent with the unused local APN from the local APN subscription information queue, to activate the PDP/PDN context, the method further includes:
when the subscription information consistent with the unused local APN does not exist, selecting a group of subscription information that includes an unused other APN from the other APN subscription information queue, to activate the PDP/PDN context.

With reference to the fifth possible implementation manner of the third aspect, in a sixth possible implementation manner, the other APN subscription information queue includes at least first other APN subscription information and second other APN subscription information, and a priority of the first other APN is higher than a priority of the second other APN; and
the selecting a group of subscription information that includes an unused other APN from the other APN subscription information queue, to activate the PDP/PDN context includes:
   querying whether the other APN in the first other APN subscription information exists in a list of used other APNs;
   when it is found that the other APN in the first other APN subscription information exists in the list of used other APNs, querying whether the other APN in the second other APN subscription information exists in the list of used other APNs;
   when it is found that the other APN in the second other APN subscription information does not exist in the list of used other APNs, selecting the second other APN subscription information as subscription information used to activate the PDP/PDN context;
   activating the PDP/PDN context according to the second other APN subscription information; and
   adding the other APN in the second other APN subscription information to the list of used other APNs.

With reference to the third aspect, in a seventh possible implementation manner, the obtaining at least one group of subscription information of a user includes:
sending a subscription information request to a server; and
receiving at least two groups of subscription information of the user that are sent by the server, where a default APN in any subscription information in the at least two groups of subscription information of the user is different from a default APN in other subscription information.

With reference to the first possible implementation manner of the third aspect, in an eighth possible implementation manner, the matching requirement includes one or more of a PDP type or a PDP address;
after the preferentially selecting a group of subscription information that includes an unused default APN from the at least two groups of non-wildcard subscription information that meets the matching requirement, to activate the PDP/PDN context, the method further includes:
   when the subscription information that includes the unused default APN does not exist in the at least two groups of non-wildcard subscription information that meets matching requirement, selecting a piece of subscription information consistent with the unused local APN from the at least one group of subscription information of the user, to activate the PDP/PDN context; and
   after the selecting a piece of subscription information consistent with the unused local APN, to activate the PDP/PDN context, the method further includes:
      when the subscription information consistent with the unused local APN does not exist, selecting a group of subscription information that includes an unused other APN from the at least one group of subscription information of the user, to activate the PDP/PDN context.

With reference to the third aspect, in a ninth possible implementation manner, the at least one local APN includes at least a first local APN and a second local APN, and a priority of the first local APN is higher than a priority of the second local APN;
the selecting one unused local APN from at least one local APN includes:
   querying whether the first local APN exists in a second list of used local APNs;
   when it is found that the first local APN exists in the second list of used local APNs, querying whether the second local APN exists in the second list of used local APNs; and
   when it is found that the second local APN does not exist in the second list of used local APNs, preferentially selecting the second local APN as an APN used to activate the PDP/PDN context with reference to the wildcard subscription information; and
   the activating the PDP/PDN context with reference to the wildcard subscription information includes:
      activating the PDP/PDN context based on the second local APN with reference to the wildcard subscription information; and
      adding the second local APN to the second list of used local APNs.

With reference to the first possible implementation manner of the third aspect, in a tenth possible implementation manner, after the obtaining at least one group of subscription information of a user, the method further includes:
when a unique group of non-wildcard subscription information that meets the matching requirement exists, determining whether an APN included in the unique group of non-wildcard subscription information that meets the matching requirement is used, and
if it is determined that the APN included in the unique group of non-wildcard subscription information that meets the matching requirement is used, preferentially selecting the group of subscription information that includes the unused default APN from the at least one group of subscription information of the user, to activate the PDP/PDN context; and
when the subscription information that includes the unused default APN does not exist in the at least one group of subscription information of the user, selecting a piece of subscription information consistent with the unused local APN from the at least one group of subscription information of the user, to activate the PDP/PDN context;
after the selecting a piece of subscription information consistent with the unused local APN from the at least one group of subscription information of the user, to activate the PDP/PDN context, the method further includes:
   when the subscription information consistent with the unused local APN does not exist in the at least one group of subscription information of the user, selecting a group of subscription information that includes an unused other APN from the at least one group of subscription information of the user, to activate the PDP/PDN context; and
   after the selecting a group of subscription information that includes an unused other APN from the at least one group of subscription information of the user, to activate the PDP/PDN context, the method further includes:
when the subscription information that includes the unused other APN does not exist in the at least one group of subscription information of the user, activating the PDP/PDN context based on the unique group of non-wildcard subscription information that meets the matching requirement.

According to a fourth aspect, an embodiment of the present invention provides a subscription information providing method, including:
receiving a subscription information request sent by a control node;
searching, according to the subscription information request, for at least two groups of subscription information of a user that are subscribed to by the user, where default access point names default APNs included in the at least two groups of subscription information of the user are different from each other; and
sending the at least two groups of subscription information of the user to the control node.

With reference to the fourth aspect, in a first possible implementation manner, before the receiving a subscription information request sent by a control node, the method further includes:
receiving a subscription request of the user, where the subscription request carries specified information of at least two default APNs that are different from each other; and
generating the at least two groups of subscription information of the user according to the specified information, where a default APN in any subscription information in the at least two groups of subscription information of the user is different from a default APN in other subscription information.

According to a fifth aspect, an embodiment of the present invention provides a control node, including: an input apparatus, an output apparatus, a memory, and a processor, where the memory stores a group of program code, and the processor is configured to invoke the program code stored in the memory to perform the following operations:
obtaining at least one group of subscription information of a user;
preferentially selecting, when subscription information that meets a matching requirement does not exist, a group of subscription information that includes an unused default access point name default APN from the at least one group of subscription information of the user, to activate a packet data protocol PDP/packet data network PDN context;
when at least two groups of non-wildcard subscription information that meets the matching requirement exist, preferentially selecting a group of subscription information that includes an unused default APN from the at least two groups of non-wildcard subscription information that meets the matching requirement, to activate the PDP/PDN context; and
when only wildcard subscription information that meets the matching requirement exists, selecting one unused local APN from at least one local APN, to activate the PDP/PDN context with reference to the wildcard subscription information.

With reference to the fifth aspect, in a first possible implementation manner, after obtaining the at least one group of subscription information of the user, the processor is further configured to perform any one of the following steps:
extracting subscription information that includes a default APN from the at least one group of subscription information of the user, and adding the subscription information that includes the default APN to a default APN subscription information queue;
extracting subscription information consistent with the at least one local APN from subscription information remaining after the extraction of the subscription information that includes the default APN, and adding the subscription information consistent with the at least one local APN to a local APN subscription information queue; and
adding, to an other APN subscription information queue, non-wildcard subscription information remaining after the extraction of the subscription information consistent with the at least one local APN.

With reference to the first possible implementation manner of the fifth aspect, in a second possible implementation manner, the default APN subscription information queue includes at least first default APN subscription information and second default APN subscription information, and a priority of the first default APN is higher than a priority of the second default APN; and
that the processor performs preferentially selecting, when subscription information that meets a matching requirement does not exist, a group of subscription information that includes an unused default access point name default APN from the at least one group of subscription information of the user, to activate a packet data protocol PDP/PDN context includes:
   querying whether the default APN in the first default APN subscription information exists in a list of used default APNs;
   when finding that the default APN in the first default APN subscription information exists in the list of used default APNs, querying whether the default APN in the second default APN subscription information exists in the list of used default APNs;
   when finding that the default APN in the second default APN subscription information does not exist in the list of used default APNs, preferentially selecting the second default APN subscription information as subscription information used to activate the PDP/PDN context;
   activating the PDP/PDN context according to the second default APN subscription information; and
   adding the default APN in the second default APN subscription information to the list of used default APNs.

With reference to the second possible implementation manner of the fifth aspect, in a third possible implementation manner, after preferentially selecting the group of subscription information that includes the unused default access point name default APN from the at least one group of subscription information of the user, to activate the packet data protocol PDP/PDN context, the processor is further configured to perform the following step:
when the subscription information that includes the unused default APN does not exist in the at least one group of subscription information of the user, selecting a piece of subscription information consistent with the unused local APN from the local APN subscription information queue, to activate the PDP/PDN context. With reference to the third possible implementation manner of the fifth aspect, in a fourth possible implementation manner, the local APN subscription information queue includes at least first local APN subscription information and second local APN subscription information, and a priority of the first local APN is higher than a priority of the second local APN; and
that the processor performs selecting subscription information consistent with the unused local APN, to activate the PDP/PDN context includes:
   querying whether the local APN in the first local APN subscription information exists in a first list of used local APNs;
   when finding that the local APN in the first local APN subscription information exists in the first list of used local APNs, querying whether the local APN in the second local APN subscription information exists in the first list of used local APNs;
   when finding that the local APN in the second local APN subscription information does not exist in the first list of used local APNs, selecting the second local APN subscription information as subscription information used to activate the PDP/PDN context;
   activating the PDP/PDN context according to the second local APN subscription information; and
   adding the local APN in the second local APN subscription information to the first list of used local APNs.

With reference to the third possible implementation manner of the fifth aspect, in a fifth possible implementation manner, after selecting the piece of subscription information consistent with the unused local APN from the local APN subscription information queue, to activate the PDP/PDN context, the processor is further configured to perform the following step:
when the subscription information consistent with the unused local APN does not exist, selecting a group of subscription information that includes an unused other APN from the other APN subscription information queue, to activate the PDP/PDN context.

With reference to the fifth possible implementation manner of the fifth aspect, in a sixth possible implementation manner, the other APN subscription information queue includes at least first other APN subscription information and second other APN subscription information, and a priority of the first other APN is higher than a priority of the second other APN; and
that the processor performs selecting a group of subscription information that includes an unused other APN from the other APN subscription information queue, to activate the PDP/PDN context includes:
   querying whether the other APN in the first other APN subscription information exists in a list of used other APNs;
   when finding that the other APN in the first other APN subscription information exists in the list of used other APNs, querying whether the other APN in the second other APN subscription information exists in the list of used other APNs;
   when finding that the other APN in the second other APN subscription information does not exist in the list of used other APNs, selecting the second other APN subscription information as subscription information used to activate the PDP/PDN context;
   activating the PDP/PDN context according to the second other APN subscription information; and
   adding the other APN in the second other APN subscription information to the list of used other APNs.

With reference to the fifth aspect, in a seventh possible implementation manner, that the processor performs obtaining at least one group of subscription information of a user includes:
sending a subscription information request to a server; and
receiving at least two groups of subscription information of the user that are sent by the server, where a default APN in any subscription information in the at least two groups of subscription information of the user is different from a default APN in other subscription information.

With reference to the first possible implementation manner of the fifth aspect, in an eighth possible implementation manner, the matching requirement includes one or more of a PDP type or a PDP address;
after preferentially selecting the group of subscription information that includes the unused default APN from the at least two groups of non-wildcard subscription information that meets the matching requirement, to activate the PDP/PDN context, the processor is further configured to perform the following step:
   when the subscription information that includes the unused default APN does not exist in the at least two groups of non-wildcard subscription information that meets matching requirement, selecting a piece of subscription information consistent with the unused local APN from the at least one group of subscription information of the user, to activate the PDP/PDN context; and
   after selecting the piece of subscription information consistent with the unused local APN, to activate the PDP/PDN context, the processor is further configured to perform the following step:
when the subscription information consistent with the unused local APN does not exist, selecting a group of subscription information that includes an unused other APN from the at least one group of subscription information of the user, to activate the PDP/PDN context.

With reference to the fifth aspect, in a ninth possible implementation manner, the at least one local APN includes at least a first local APN and a second local APN, and a priority of the first local APN is higher than a priority of the second local APN;
that the processor selects one unused local APN from at least one local APN includes:
   querying whether the first local APN exists in a second list of used local APNs;
   when finding that the first local APN exists in the second list of used local APNs, querying whether the second local APN exists in the second list of used local APNs; and
   when finding that the second local APN does not exist in the second list of used local APNs, preferentially selecting the second local APN as an APN used to activate the PDP/PDN context with reference to the wildcard subscription information; and
   that the processor activates the PDP/PDN context with reference to the wildcard subscription information includes:
      activating the PDP/PDN context based on the second local APN with reference to the wildcard subscription information; and
      adding the second local APN to the second list of used local APNs.

With reference to the first possible implementation manner of the fifth aspect, in a tenth possible implementation manner, after obtaining the at least one group of subscription information of the user, the processor is further configured to perform the following steps:
when a unique group of non-wildcard subscription information that meets the matching requirement exists, determining whether an APN included in the unique group of non-wildcard subscription information that meets the matching requirement is used, and
if determining that the APN included in the unique group of non-wildcard subscription information that meets the matching requirement is used, preferentially selecting the group of subscription information that includes the unused default APN from the at least one group of subscription information of the user, to activate the PDP/PDN context; and
when the subscription information that includes the unused default APN does not exist in the at least one group of subscription information of the user, selecting a piece of subscription information consistent with the unused local APN from the at least one group of subscription information of the user, to activate the PDP/PDN context;
after selecting the piece of subscription information consistent with the unused local APN from the at least one group of subscription information of the user, to activate the PDP/PDN context, the processor is further configured to perform the following step:
when the subscription information consistent with the unused local APN does not exist in the at least one group of subscription information of the user, selecting a group of subscription information that includes an unused other APN from the at least one group of subscription information of the user, to activate the PDP/PDN context; and
after selecting the group of subscription information that includes the unused other APN from the at least one group of subscription information of the user, to activate the PDP/PDN context, the processor is further configured to perform the following step:
   when the subscription information that includes the unused other APN does not exist in the at least one group of subscription information of the user, activating the PDP/PDN context based on the unique group of non-wildcard subscription information that meets the matching requirement.

According to a sixth aspect, an embodiment of the present invention provides a server, including: an input apparatus, an output apparatus, a memory, and a processor, where the memory stores a group of program code, and the processor is configured to invoke the program code stored in the memory to perform the following operations:
receiving a subscription information request sent by a control node;
searching, according to the subscription information request, for at least two groups of subscription information of a user that are subscribed to by the user, where default access point names default APNs included in the at least two groups of subscription information of the user are different from each other; and
sending the at least two groups of subscription information of the user to the control node.

With reference to the sixth aspect, in a first possible implementation manner, before receiving the subscription information request sent by the control node, the processor is further configured to perform the following steps:
receiving a subscription request of the user, where the subscription request carries specified information of at least two default APNs that are different from each other; and
generating the at least two groups of subscription information of the user according to the specified information, where a default APN in any subscription information in the at least two groups of subscription information of the user is different from a default APN in other subscription information.

According to a seventh aspect, an embodiment of the present invention provides a server, including a control node and a server, where the control node is the control node according to any one of the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, the eighth possible implementation manner of the first aspect, the ninth possible implementation manner of the first aspect, or the tenth possible implementation manner of the first aspect, and the server is the server according to any one of the second aspect or the first possible implementation manner of the second aspect.

In a process in which the control node in the embodiments of the present invention activates a PDP/PDN context, when obtained subscription information does not meet a matching requirement of a user for subscription information, subscription information that includes a default APN is preferentially used to activate the PDP/PDN context. In addition, when at least two groups of non-wildcard subscription information that meets the matching requirement exist, subscription information that includes an unused default APN may be selected to activate the PDP/PDN context. Furthermore, when only wildcard subscription information that meets the matching requirement exists, an unused local APN may be selected to activate the PDP/PDN context with reference to the wildcard subscription information. Therefore, when activating the PDP/PDN context for multiple times, the control node in the embodiments of the present invention can use subscription information that includes different APNs, so as to resolve a problem that a service type applied by the user is excessively undiversified due to repeat use of an APN, thereby expanding a scope of a service type available to the user, and improving an activation success rate and user satisfaction.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1a is a schematic structural diagram of a first embodiment of a control node according to the present invention;
FIG. 1b is a schematic structural diagram of a second embodiment of a control node according to the present invention;
FIG. 1c is a schematic structural diagram of a third embodiment of a control node according to the present invention;
FIG. 1d is a schematic structural diagram of a fourth embodiment of a control node according to the present invention;
FIG. 1e is a schematic structural diagram of a fifth embodiment of a control node according to the present invention;
FIG. 1f is a schematic structural diagram of a sixth embodiment of a control node according to the present invention;
FIG. 1g is a schematic structural diagram of a seventh embodiment of a control node according to the present invention;
FIG. 1h is a schematic structural diagram of an eighth embodiment of a control node according to the present invention;
FIG. 2a is a schematic structural diagram of a first embodiment of a server according to the present invention;
FIG. 2b is a schematic structural diagram of a second embodiment of a server according to the present invention;
FIG. 3 is a schematic flowchart of an embodiment of a PDP/PDN context activation method according to the present invention;
FIG. 4 is a schematic flowchart of an embodiment of a subscription information providing method according to the present invention;
FIG. 5a-1 and FIG. 5a-2 are a schematic flowchart of a first embodiment of a control node according to the present invention;
FIG. 5b-1 and FIG. 5b-2 are a supplementary part of the schematic flowchart of the first embodiment of the control node according to the present invention;

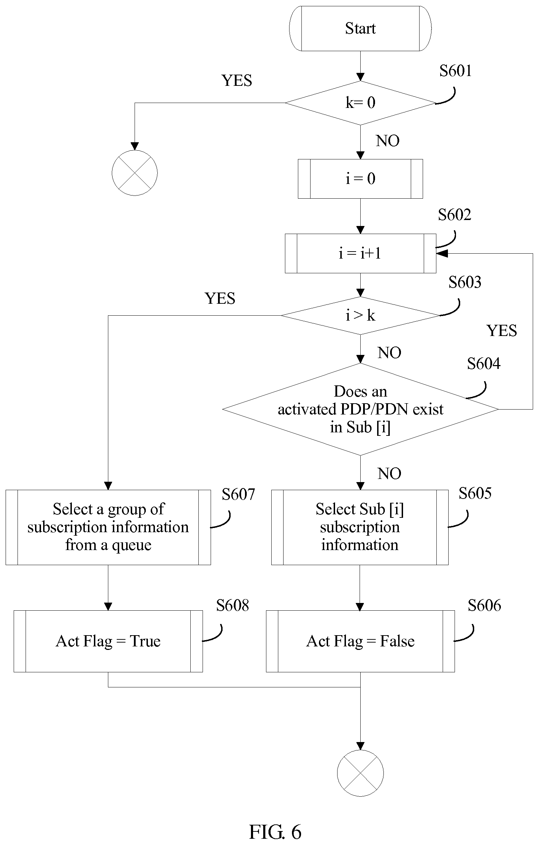

FIG. 6 is a schematic flowchart of a second embodiment of a control node according to the present invention;

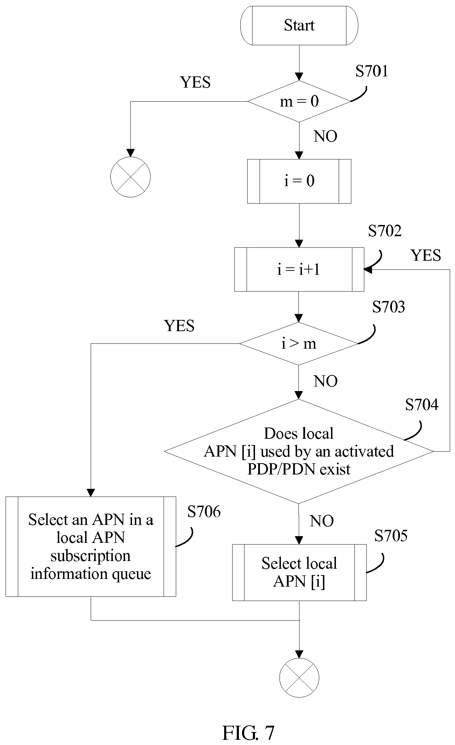

FIG. 7 is a schematic flowchart of a third embodiment of a control node according to the present invention;

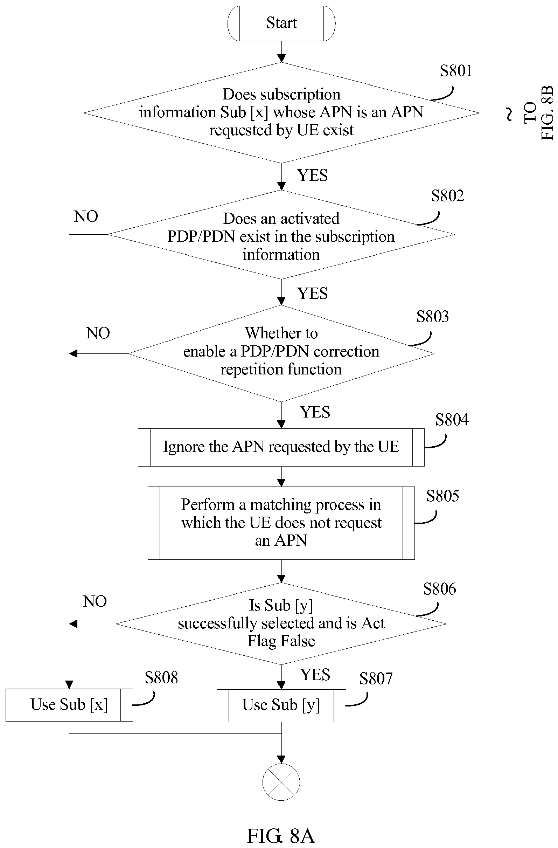

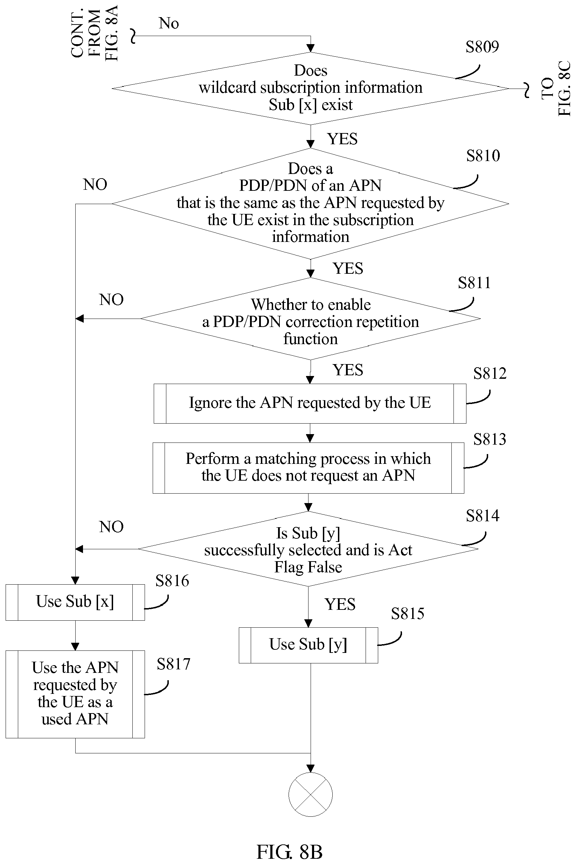

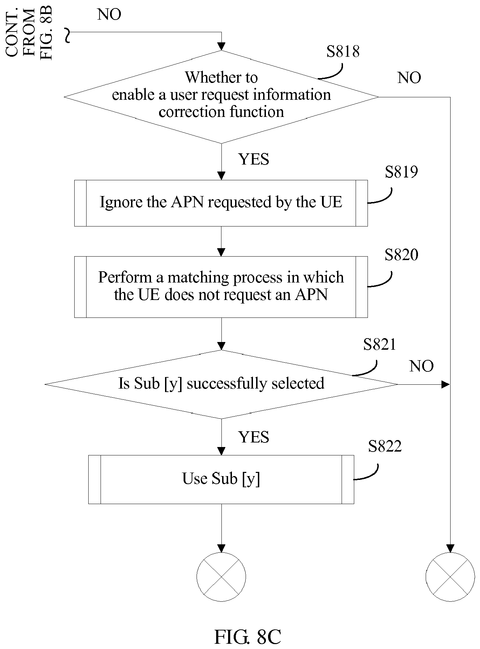

FIG. 8A to FIG. 8C are a schematic flowchart of a fourth embodiment of a control node according to the present invention;

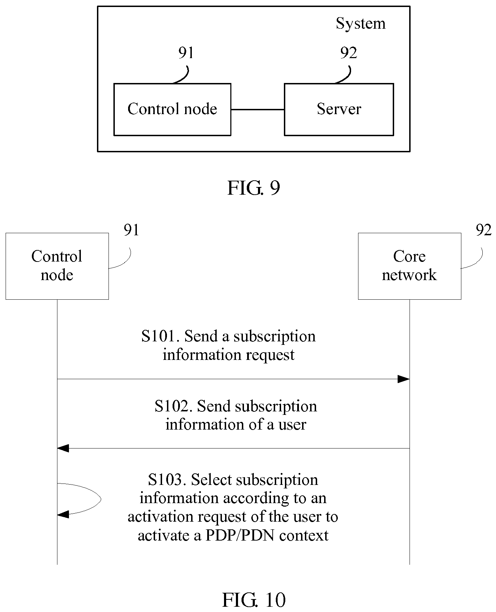

FIG. 9 is a schematic structural diagram of an embodiment of a system according to the present invention;
FIG. 10 is a schematic flowchart of an embodiment of a system according to the present invention;

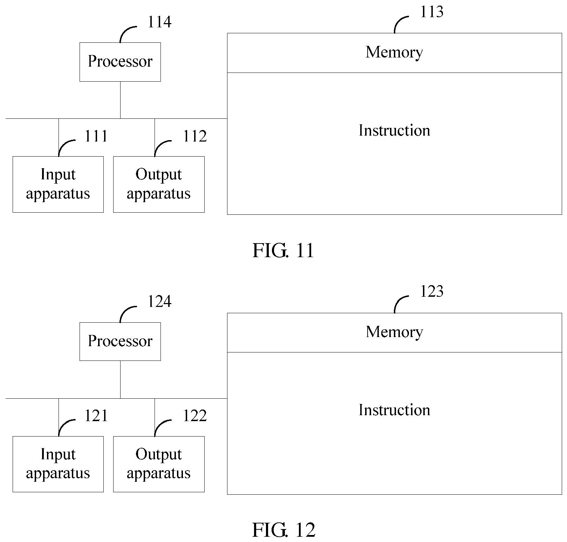

FIG. 11 is a schematic flowchart of an embodiment of another control node according to the present invention; and
FIG. 12 is a schematic flowchart of an embodiment of another server according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

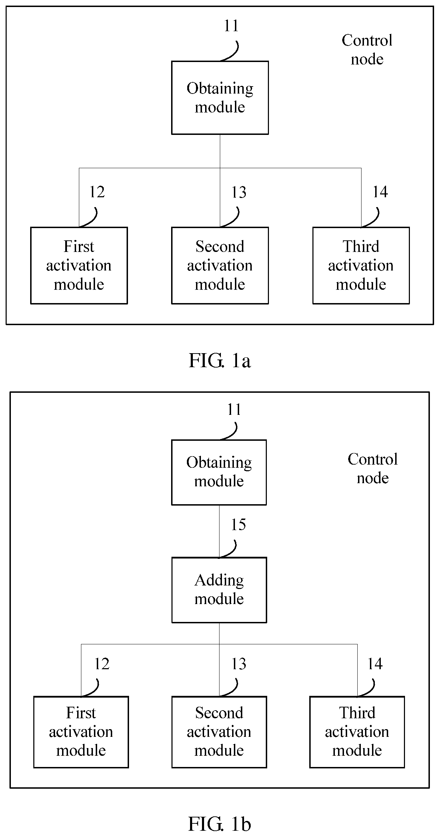

Referring to FIG. 1a, FIG. 1a is a schematic structural diagram of a control node according to an embodiment of the present invention. As shown in FIG. 1a, the control node in this embodiment of the present invention may include at least the following:
an obtaining module 11, configured to obtain at least one group of subscription information of a user;
a first activation module 12, configured to: when subscription information that meets a matching requirement does not exist, preferentially select a group of subscription information that includes an unused default access point name default APN from the at least one group of subscription information of the user, to activate a packet data protocol PDP/PDN context;
a second activation module 13, configured to: when at least two groups of non-wildcard subscription information that meets the matching requirement exist, preferentially select a group of subscription information that includes an unused default APN from the at least two groups of non-wildcard subscription information that meets the matching requirement, to activate the PDP/PDN context; and
a third activation module 14, configured to: when only wildcard subscription information that meets the matching requirement exists, select one unused local APN from at least one local APN, to activate the PDP/PDN context with reference to the wildcard subscription information.

In this embodiment of the present invention, the control node may be a serving GPRS support node SGSN or a mobility management entity MME. When a user is attached, the user can transmit service data only after the control node activates a corresponding PDP/PDN context.

Further, optionally, when the user is attached, the user sends an activation request to the control node. When the control node receives the activation request of the user, the control node may send a subscription information request to a server to perform step S301, so that the server searches the server for subscription information of the user according to the subscription information request, and then the control node receives the subscription information, of the user, that is sent by the server.

Further, optionally, the activation request of the user may further include the matching requirement. The control node should select, according to the matching requirement, a group of subscription information used to activate the PDP/PDN context from subscription information provided by the server. The matching requirement proposed by the user in the activation request may include a specified PDP type, a specified PDP address, and a specified APN. When the matching requirement proposed by the user includes at least one of the specified PDP type, the specified PDP address, or the specified APN, the control node should find a group of subscription information consistent with the matching requirement to activate the PDP/PDN context.

Further, optionally, a subscription information structure may include at least information such as a PDP type, a PDP address, and an APN. This embodiment of the present invention improves, based on an APN, a subscription information selection method. An APN type in this embodiment of the present invention may include a default APN, a local APN, and an other APN. The default APN is a default access point name specified when the user subscribes to the server. The server mentioned in this embodiment of the present invention may store more than one group of subscription information that includes a default APN. The local APN is a local access point name to which the user subscribes with the local control node, and is mainly used to provide an access point name when the user subscribes to a wildcard. The local control node mentioned in this embodiment of the present invention may store at least one APN for the user. The other APN is an APN, except the default APN involved in a process in which the user subscribes to the server, that is not the same as the local APN. Referring to FIG. 1b, the control node may use an adding module 15 to perform specific operations for classifying the obtained subscription information according to the APN type.

The adding module 15 is configured to: extract subscription information that includes a default APN from the at least one group of subscription information of the user, and add the subscription information that includes the default APN to a default APN subscription information queue.

The adding module 15 is further configured to: extract subscription information consistent with the at least one local APN from subscription information remaining after the extraction of the subscription information that includes the default APN, and add the subscription information consistent with the at least one local APN to a local APN subscription information queue.

The adding module 15 is further configured to add, to an other APN subscription information queue, non-wildcard subscription information remaining after the extraction of the subscription information consistent with the at least one local APN.

It may be learned that, when the user subscribes to sufficient subscription information with the server, the default APN subscription information queue may include at least two groups of subscription information that include different default APNs, the local APN subscription information queue may include at least two groups of subscription information that include different local APNs, and the other APN subscription information queue may include at least two groups of subscription information that include different other APNs. In addition, an arrangement sequence may also be set between subscription information of a same type for convenience of selection. A manner of setting the arrangement sequence may include setting a priority for each piece of subscription information and setting a number for each piece of subscription information.

Further, optionally, to expand an applicable service scope of the user, in this embodiment of the present invention, after the PDP/PDN context is activated according to the subscription information, an APN in the subscription information used to activate the PDP/PDN context is recorded. For example, a list of used APNs is generated for querying. During a N^{th} (N > 1) time of activation, subscription information corresponding to an unused APN is selected according to the list of used APNs to perform activation. All the following content in this embodiment of the present invention is implemented when a requirement, in the matching requirement, for a PDP type and a PDP address is met, or no requirement for a PDP type or a PDP address is made in the matching requirement.

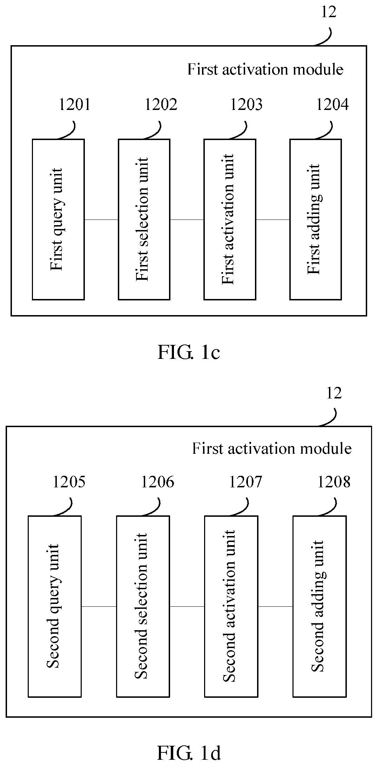

Further, optionally, referring to FIG. 1c, when the subscription information that meets the matching requirement does not exist in the at least one group of subscription information provided by the server, subscription matching correction needs to be performed. In specific implementation, when at least two groups of subscription information that include default APNs exist in the subscription information received from the server, the control node needs to select a group of subscription information used to activate the PDP/PDN context from the at least two groups of subscription information. For example, when the default APN subscription information queue includes at least first default APN subscription information and second default APN subscription information, and a preset priority of a first default APN is higher than a preset priority of a second default APN, by using a first query unit 1201, a first selection unit 1202, a first activation unit 1203, and a first adding unit 1204, the first activation module 12 may further select subscription information from the default APN subscription information queue and activate the PDP/PDN context.

The first query unit 1201 is configured to query whether the default APN in the first default APN subscription information exists in a list of used default APNs.

The first query unit 1201 is further configured to: when finding that the default APN in the first default APN subscription information exists in the list of used default APNs, query whether the default APN in the second default APN subscription information exists in the list of used default APNs.

The first query unit 1201 is further configured to: when finding that the default APN in the second default APN subscription information does not exist in the list of used default APNs, send a first selection prompt message to the first selection unit 1202.

The first selection unit 1202 is configured to: after receiving the first selection prompt message, preferentially select the second default APN subscription information as subscription information used to activate the PDP/PDN context.

The first activation unit 1203 is configured to activate the PDP/PDN context according to the second default APN subscription information.

The first adding unit 1204 is configured to add the default APN in the second default APN subscription information to the list of used default APNs.

Further, optionally, if it is found by means of confirmation by the first activation module 12 that the subscription information that includes the unused default APN does not exist in the at least one group of subscription information, of the user, that is provided by the server, that is, subscription information that includes a default APN does not exist in the subscription information provided by the server, or subscription information that includes a default APN and is provided by the server is used, the first activation module 12 may further perform an operation of activating the PDP/PDN context by using subscription information in the local APN subscription information queue. For example, when the local APN subscription information queue includes at least first local APN subscription information and second local APN subscription information, and a preset priority of a first local APN is higher than a preset priority of a second local APN, further, optionally, referring to FIG. 1d, by using a second query unit 1205, a second selection unit 1206, a second activation unit 1207, and a second adding unit 1208, the first activation module 12 may further select subscription information from the local APN subscription information queue and activate the PDP/PDN context.

The second query unit 1205 is configured to query whether the local APN in the first local APN subscription information exists in a first list of used local APNs.

The second query unit 1205 is further configured to: when finding that the local APN in the first local APN subscription information exists in the first list of used local APNs, query whether the local APN in the second local APN subscription information exists in the first list of used local APNs.

The second query unit 1205 is further configured to: when finding that the local APN in the second local APN subscription information does not exist in the first list of used local APNs, send a second selection prompt message to the second selection unit.

The second selection unit 1206 is configured to: after receiving the second selection prompt message, select the second local APN subscription information as subscription information used to activate the PDP/PDN context.

The second activation unit 1207 is configured to activate the PDP/PDN context according to the second local APN subscription information.

The second adding unit 1208 is configured to add the local APN in the second local APN subscription information to the first list of used local APNs.

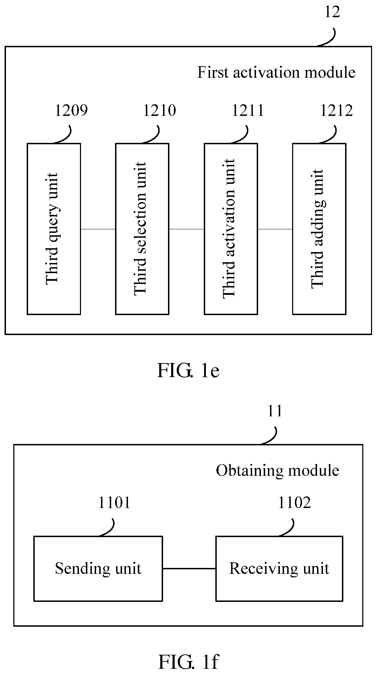

Further, optionally, if it is found by means of further confirmation by the first activation module 12 that the subscription information that includes the unused local APN does not exist in the at least one group of subscription information, of the user, that is provided by the server, that is, subscription information that includes a local APN does not exist in the subscription information provided by the server, or subscription information that includes a local APN and is provided by the server is used, the first activation module 12 may further perform an operation of activating the PDP/PDN context by using subscription information in the other APN subscription information queue. For example, when the other APN subscription information queue includes at least first other APN subscription information and second other APN subscription information, and a preset priority of a first other APN is higher than a preset priority of a second other APN, further, optionally, referring to FIG. 1e, by using a third query unit 1209, a third selection unit 12010, a third activation unit 1211, and a third adding unit 1212, the first activation module 12 may further select subscription information from the local APN subscription information queue and activate the PDP/PDN context.

The third query unit 1209 is configured to query whether the other APN in the first other APN subscription information exists in a list of used other APNs.

The third query unit 1209 is further configured to: when finding that the other APN in the first other APN subscription information exists in the list of used other APNs, query whether the other APN in the second other APN subscription information exists in the list of used other APNs.

The third query unit 1209 is further configured to: when finding that the other APN in the second other APN subscription information does not exist in the list of used other APNs, send a third selection prompt message to the third selection unit.

The third selection unit 1210 is configured to: after receiving the third selection prompt message, select the second other APN subscription information as subscription information used to activate the PDP/PDN context.

The third activation unit 1211 is configured to activate the PDP/PDN context according to the second other APN subscription information.

The third adding unit 1212 is configured to add the other APN in the second other APN subscription information to the list of used other APNs.

Further, optionally, referring to FIG. 1f, an obtaining source from which the control node obtains the subscription information may be a server. The obtaining module 11 may include:
a sending unit 1101, configured to send a subscription information request to the server;
a receiving unit 1102, configured to receive at least two groups of subscription information of the user that are sent by the server, where a default APN in any subscription information in the at least two groups of subscription information of the user is different from a default APN in other subscription information.

Further, optionally, when the at least two groups of non-wildcard subscription information that meets the matching requirement exist, the group of subscription information that includes the unused default APN is preferentially selected from the at least two groups of non-wildcard subscription information that meets the matching requirement to activate the PDP/PDN context. Two cases in which the at least two groups of non-wildcard subscription information that meets the matching requirement exist may be as follows: In the matching requirement in the activation request, no requirement is proposed for a PDP address, a PDP type, or an APN, or no requirement is made for an APN when a requirement is proposed for only at least one of a PDP address or a PDP type. In this case, multiple groups of non-wildcard subscription information that meets the matching requirement may exist.

The second activation module 13 is further configured to: when the subscription information that includes the unused default APN does not exist in the at least two groups of non-wildcard subscription information that meets matching requirement, select a piece of subscription information consistent with the unused local APN from the at least one group of subscription information of the user, to activate the PDP/PDN context.

Further, optionally, if it is found by means of confirmation by the second activation module 13 that the subscription information that includes the unused default APN does not exist in the at least one group of subscription information, of the user, that is provided by the server, that is, subscription information that includes a default APN does not exist in the subscription information provided by the server, or subscription information that includes a default APN and is provided by the server is used, the second activation module 13 may further perform an operation of activating the PDP/PDN context by using subscription information in the local APN subscription information queue.

The second activation module 13 is further configured to: when the subscription information consistent with the unused local APN does not exist, select a group of subscription information that includes an unused other APN from the at least one group of subscription information of the user, to activate the PDP/PDN context.

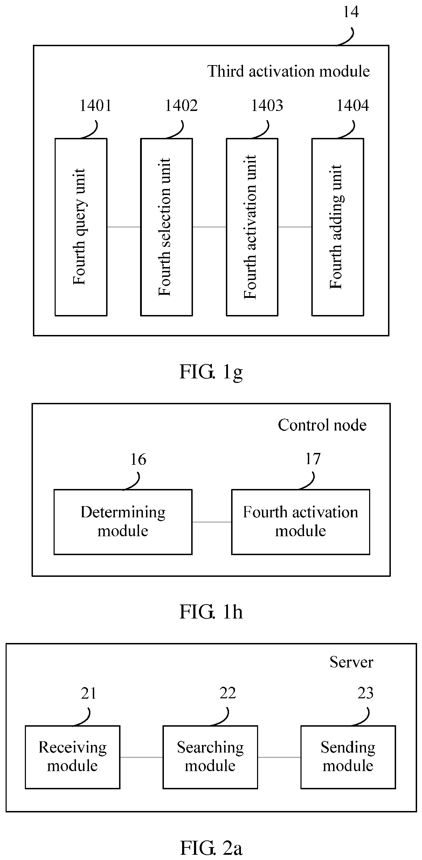

Further, optionally, the user may subscribe to at least one local APN with the control node in this embodiment of the present invention, that is, when the user subscribes to a wildcard, the control node may select one APN from multiple locally provided local APNs, to activate the PDP/PDN context with reference to the wildcard subscription information. When configuring multiple local APNs for the user, the control node may further configure priorities of the APNs, so as to quickly specify an APN. For example, when locally stored local APNs include at least a first local APN and a second local APN, and a priority of the first local APN is higher than a priority of the second local APN, referring to FIG. 1g, by using a fourth query unit 1401, a fourth selection unit 1402, a fourth activation unit 1403, and a fourth adding unit 1404, the third activation module 14 may further select one local APN locally to activate the PDP/PDN context with reference to the wildcard subscription information.

The fourth query unit 1401 is configured to query whether the first local APN exists in a second list of used local APNs.

The fourth query unit 1401 is further configured to: when finding that the first local APN exists in the second list of used local APNs, query whether the second local APN exists in the second list of used local APNs.

The fourth query unit 1401 is further configured to: when finding that the second local APN does not exist in the second list of used local APNs, send a fourth selection prompt message to the fourth selection unit.

The fourth selection unit 1402 is configured to: after receiving the fourth selection prompt message, preferentially select the second local APN as an APN used to activate the PDP/PDN context with reference to the wildcard subscription information.

The fourth activation unit 1403 is configured to activate the PDP/PDN context based on the second local APN with reference to the wildcard subscription information. The fourth adding unit 1404 is configured to add the second local APN to the second list of used local APNs.

Further, optionally, when the matching requirement makes a requirement for a PDP type, a PDP address, and an APN, and it is found by means of analyzing that only one group of non-wildcard subscription information that meets the matching requirement exists, referring to FIG. 1h, selection of subscription information is further improved in this embodiment of the present invention.

A determining module 16 is configured to: when a unique group of non-wildcard subscription information that meets the matching requirement exists, determine whether an APN included in the unique group of non-wildcard subscription information that meets the matching requirement is used, and when determining that the APN included in the unique group of non-wildcard subscription information that meets the matching requirement is used, send a reselection prompt message to a fourth activation module.

The fourth activation module 17 is configured to: after receiving the reselection prompt message sent by the determining module, preferentially select the group of subscription information that includes the unused default APN from the at least one group of subscription information of the user, to activate the PDP/PDN context.

The fourth activation module 17 is further configured to: when the subscription information that includes the unused default APN does not exist in the at least one group of subscription information of the user, select a piece of subscription information consistent with the unused local APN from the at least one group of subscription information of the user, to activate the PDP/PDN context.

The fourth activation module 17 is further configured to: when the subscription information consistent with the unused local APN does not exist in the at least one group of subscription information of the user, select a group of subscription information that includes an unused other APN from the at least one group of subscription information of the user, to activate the PDP/PDN context.

The fourth activation module 17 is further configured to: when the subscription information that includes the unused other APN does not exist in the at least one group of subscription information of the user, activate the PDP/PDN context based on the unique group of non-wildcard subscription information that meets the matching requirement.

In a process in which the control node provided in this embodiment of the present invention activates a PDP/PDN context, when obtained subscription information does not meet a matching requirement of a user for subscription information, subscription information that includes a default APN is preferentially used to activate the PDP/PDN context. In addition, when at least two groups of non-wildcard subscription information that meets the matching requirement exist, subscription information that includes an unused default APN is selected to activate the PDP/PDN context. Furthermore, when only wildcard subscription information that meets the matching requirement exists, an unused local APN is selected to activate the PDP/PDN context with reference to the wildcard subscription information. Therefore, when activating the PDP/PDN context for multiple times, the control node in this embodiment of the present invention can use subscription information that includes different APNs, so as to resolve a problem that a service type applied by the user is excessively undiversified due to repeat use of an APN, thereby expanding a scope of a service type available to the user, and improving an activation success rate and user satisfaction.

Referring to FIG. 2a, FIG. 2a is a schematic structural diagram of a server according to an embodiment of the present invention. As shown in FIG. 2a, the server in this embodiment of the present invention may include at least the following:
a receiving module 21, configured to receive a subscription information request sent by a control node;
a searching module 22, configured to search, according to the subscription information request, for at least two groups of subscription information of a user that are subscribed to by the user, where default access point names default APNs included in the at least two groups of subscription information of the user are different from each other; and
a sending module 23, configured to send the at least two groups of subscription information of the user to the control node.

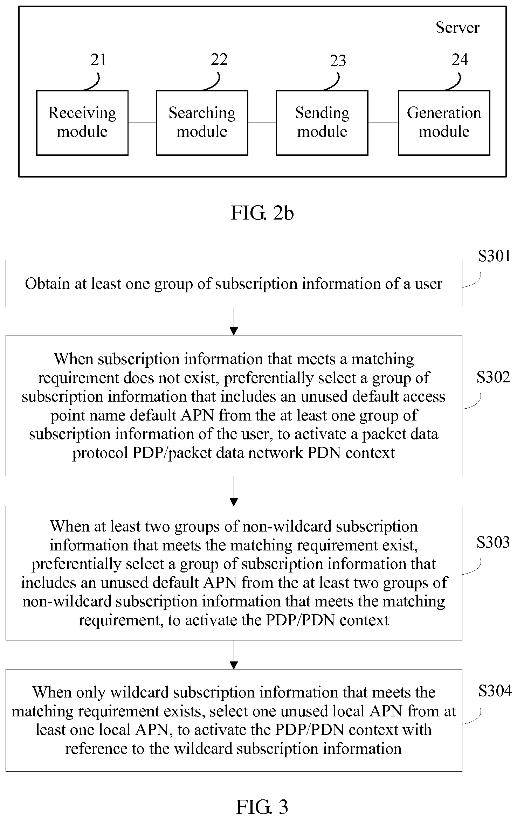

Further, optionally, referring to FIG. 2b, the server in this embodiment of the present invention may further include:
the receiving module 21, further configured to receive a subscription request of the user, where the subscription request carries specified information of at least two default APNs that are different from each other; and
a generation module 24, configured to generate the at least two groups of subscription information of the user according to the specified information, where a default APN in any subscription information in the at least two groups of subscription information of the user is different from a default APN in other subscription information.

In this embodiment of the present invention, subscription information is generated when the user subscribes to the server, and specific implementation may include: receiving the subscription request of the user, and generating the subscription information of the user according to the specified information.

In the prior art, in the subscription information generated by the server, an APN in a maximum of one group of subscription information is set as a default APN, which is improved in this embodiment of the present invention. The server may configure at least two default APNs different from each other, and generate corresponding subscription information. For example, when subscribing to the server, the user may subscribe to at least two default APNs. Accordingly, the server may generate at least two groups of subscription information. A default APN in any subscription information in the at least two groups of subscription information of the user is different from a default APN in other subscription information, and a priority is configured for each default APN.

Further, optionally, the server may provide all generated subscription information for the control node, so that the control node selects a group of subscription information used to activate a PDP/PDN context. The subscription information provided by the server may include at least two groups of subscription information that include default APNs and other subscription information.

The server provided in this embodiment of the present invention can provide at least two groups of subscription information that include default APNs for a control node, so that the control node may preferentially select subscription information used to activate a PDP/PDN context. Because multiple default APNs may be specified in the server, a user may experience different services if the control node selects different subscription information that includes a default APN, so as to resolve a problem that a service type applied by the user is excessively undiversified due to repeat use of an APN, thereby expanding a scope of a service type available to the user, and further improving an activation success rate of activating the PDP/PDN context by the control node and user satisfaction.

Referring to FIG. 3, FIG. 3 is a flowchart of a PDP/PDN context activation method according to an embodiment of the present invention. The packet data protocol context activation method shown in FIG. 3 is described from a perspective of a control node. As shown in FIG. 3, the method provided in this embodiment of the present invention specifically includes the following steps.

Step S301: Obtain at least one group of subscription information of a user.

Step S302: When subscription information that meets a matching requirement does not exist, preferentially select a group of subscription information that includes an unused default access point name default APN from the at least one group of subscription information of the user, to activate a packet data protocol PDP/PDN context.

Step S303: When at least two groups of non-wildcard subscription information that meets the matching requirement exist, preferentially select a group of subscription information that includes an unused default APN from the at least two groups of non-wildcard subscription information that meets the matching requirement, to activate the PDP/PDN context.

Step S304: When only wildcard subscription information that meets the matching requirement exists, select one unused local APN from at least one local APN, to activate the PDP/PDN context with reference to the wildcard subscription information.

In this embodiment of the present invention, the control node may be a serving GPRS support node SGSN or a mobility management entity MME. When a user is attached, the user can transmit service data only after the control node activates a corresponding PDP/PDN context.

Further, optionally, when the user is attached, the user sends an activation request to the control node. When receiving the activation request of the user, the control node may send a subscription information request to a server to perform step S301, so that the server searches the server for subscription information of the user according to the subscription information request, and then the control node receives the subscription information, of the user, that is sent by the server.

Further, optionally, the activation request of the user may further include the matching requirement. The control node should select, according to the matching requirement, a group of subscription information used to activate the PDP/PDN context from subscription information provided by the server. The matching requirement proposed by the user in the activation request may include a specified PDP type, a specified PDP address, and a specified APN. When the matching requirement proposed by the user includes at least one of the specified PDP type, the specified PDP address, or the specified APN, the control node should find a group of subscription information consistent with the matching requirement to activate the PDP/PDN context.

Further, optionally, a subscription information structure may include at least information such as a PDP type, a PDP address, and an APN. This embodiment of the present invention improves, based on an APN, a subscription information selection method. An APN type involved in this embodiment of the present invention may include a default APN, a local APN, and an other APN. The default APN is a default access point name specified when the user subscribes to the server. The server mentioned in this embodiment of the present invention may store more than one group of subscription information that includes a default APN. The local APN is a local access point name to which the user subscribes with the local control node, and is mainly used to provide an access point name when the user subscribes to a wildcard. The local control node mentioned in this embodiment of the present invention may store at least one APN for the user. The other APN is an APN, except the default APN involved in a process in which the user subscribes to the server, that is not the same as the local APN. The control node may classify the obtained subscription information according to the APN type. Specific operations may include:
extracting subscription information that includes a default APN from the at least one group of subscription information of the user, and adding the subscription information that includes the default APN to a default APN subscription information queue;
extracting subscription information consistent with the at least one local APN from subscription information remaining after the foregoing extraction, and adding the subscription information consistent with the at least one local APN to a local APN subscription information queue; and
adding, to an other APN subscription information queue, subscription information remaining after the foregoing extraction.

It may be learned that, when the user subscribes to sufficient subscription information with the server, the default APN subscription information queue may include at least two groups of subscription information that include different default APNs, for example, subscription information that includes a default APN₁, subscription information that includes a default APN₂, and subscription information that includes a default APNₙ, and each default APN has a priority. The local APN subscription information queue may include at least two groups of subscription information that include different local APNs, for example, subscription information that includes a local APN₁, subscription information that includes a local APN₂, and subscription information that includes a local APNₙ, and each local APN has a priority. The other APN subscription information queue may include at least two groups of subscription information that include different other APNs, for example, subscription information that includes an other APN₁, subscription information that includes an other APN₂, and subscription information that includes an other APNₙ, and each other APN has a priority. In addition, an arrangement sequence may also be set between subscription information of a same type for convenience of selection. A manner of setting the arrangement sequence may include setting a priority for each piece of subscription information and setting a number for each piece of subscription information.

Further, optionally, to expand an applicable service scope of the user, in this embodiment of the present invention, after the PDP/PDN context is activated according to the subscription information, an APN in the subscription information used to activate the PDP/PDN context is recorded. For example, a list of used APNs is generated for querying. During a N^{th} (N > 1) time of activation, subscription information corresponding to an unused APN is selected according to the list of used APNs to perform activation. All the following content in this embodiment of the present invention is implemented when a requirement, in the matching requirement, for a PDP type and a PDP address is met, or no requirement for a PDP type or a PDP address is made in the matching requirement.

As described in step S302, when the subscription information that meets the matching requirement does not exist in the at least one group of subscription information provided by the server, subscription matching correction needs to be performed. In specific implementation, when at least two groups of subscription information that include default APNs exist in the subscription information received from the server, the control node needs to select a group of subscription information used to activate the PDP/PDN context from the at least two groups of subscription information. For example, when the default APN subscription information queue includes at least first default APN subscription information and second default APN subscription information, and a preset priority of a first default APN is higher than a preset priority of a second default APN, specific implementation of selecting subscription information from the default APN subscription information queue and activating the PDP/PDN context may include: querying whether the default APN in the first default APN subscription information exists in a list of used default APNs; if it is found that the first default APN does not exist in the list of used default APNs, selecting the subscription information corresponding to the first default APN; when it is found that the default APN in the first default APN subscription information exists in the list of used default APNs, continuing to query whether the default APN in the second default APN subscription information exists in the list of used default APNs; when it is found that the default APN in the second default APN subscription information does not exist in the list of used default APNs, preferentially selecting the second default APN subscription information as subscription information used to activate the PDP/PDN context; activating the PDP/PDN context according to the second default APN subscription information; and adding the default APN in the second default APN subscription information to the list of used default APNs.

Further, optionally, if it is found by means of confirmation that the subscription information that includes the unused default APN does not exist in the at least one group of subscription information, of the user, that is provided by the server, that is, subscription information that includes a default APN does not exist in the subscription information provided by the server, or subscription information that includes a default APN and is provided by the server is used, an operation of activating the PDP/PDN context may further be performed by using subscription information in the local APN subscription information queue. When the local APN subscription information queue includes at least first local APN subscription information and second local APN subscription information, and a preset priority of a first local APN is higher than a preset priority of a second local APN, specific implementation of selecting subscription information from the local APN subscription information queue and activating the PDP/PDN context may include: querying whether the local APN in the first local APN subscription information exists in a list of used local APNs; if it is found that the first local APN does not exist in the list of used local APNs, selecting the subscription information corresponding to the first local APN; when it is found that the local APN in the first local APN subscription information exists in the list of used local APNs, continuing to query whether the local APN in the second local APN subscription information exists in the list of used local APNs; when it is found that the local APN in the second local APN subscription information does not exist in the list of used local APNs, preferentially selecting the second local APN subscription information as subscription information used to activate the PDP/PDN context; activating the PDP/PDN context according to the second local APN subscription information; and adding the local APN in the second local APN subscription information to the list of used local APNs.

Further, optionally, if it is found by means of further confirmation that the subscription information that includes the unused local APN does not exist in the at least one group of subscription information, of the user, that is provided by the server, that is, subscription information that includes a local APN does not exist in the subscription information provided by the server, or subscription information that includes a local APN and is provided by the server is used, an operation of activating the PDP/PDN context may further be performed by using subscription information in the other APN subscription information queue. When the other APN subscription information queue includes at least first other APN subscription information and second other APN subscription information, and a preset priority of a first other APN is higher than a preset priority of a second other APN, specific implementation of selecting subscription information from the other APN subscription information queue and activating the PDP/PDN context may include: querying whether the other APN in the first other APN subscription information exists in a list of used other APNs; if it is found that the first other APN does not exist in the list of used other APNs, selecting the subscription information corresponding to the first other APN; when it is found that the other APN in the first other APN subscription information exists in the list of used other APNs, continuing to query whether the other APN in the second other APN subscription information exists in the list of used other APNs; when it is found that the other APN in the second other APN subscription information does not exist in the list of used other APNs, preferentially selecting the second other APN subscription information as subscription information used to activate the PDP/PDN context; activating the PDP/PDN context according to the second other APN subscription information; and adding the other APN in the second other APN subscription information to the list of used other APNs.

As described in step S303, when the at least two groups of non-wildcard subscription information that meets the matching requirement exist, the group of subscription information that includes the unused default APN is preferentially selected from the at least two groups of non-wildcard subscription information that meets the matching requirement to activate the PDP/PDN context. Two cases in which the at least two groups of non-wildcard subscription information that meets the matching requirement exist may be as follows: In the matching requirement in the activation request, no requirement is proposed for a PDP address, a PDP type, or an APN, or no requirement is made for an APN when a requirement is proposed for only at least one of a PDP address or a PDP type. In this case, multiple groups of non-wildcard subscription information that meets the matching requirement may exist. In specific implementation, when at least two groups of subscription information that include default APNs exist in the subscription information received from the server, the control node needs to select a group of subscription information used to activate the PDP/PDN context from the at least two groups of subscription information. A method for selecting, by the control node, subscription information that includes a default APN may be the foregoing selection solution, which is not described in detail herein. Further, optionally, if it is found by means of confirmation that the subscription information that includes the unused default APN does not exist in the at least one group of subscription information, of the user, that is provided by the server, that is, subscription information that includes a default APN does not exist in the subscription information provided by the server, or subscription information that includes a default APN and is provided by the server is used, an operation of activating the PDP/PDN context may further be performed by using subscription information in the local APN subscription information queue. A method for selecting, by the control node, subscription information that includes a local APN may be the foregoing selection solution, which is not described in detail herein.

Further, optionally, if it is found by means of further confirmation that the subscription information that includes the unused local APN does not exist in the at least one group of subscription information, of the user, that is provided by the server, that is, subscription information that includes a local APN does not exist in the subscription information provided by the server, or subscription information that includes a local APN and is provided by the server is used, an operation of activating the PDP/PDN context may further be performed by using subscription information in the other APN subscription information queue. A method for selecting, by the control node, subscription information that includes an other APN may be the foregoing selection solution, which is not described in detail herein.

As described in step S302, when only the wildcard subscription information that meets the matching requirement exists, the unused local APN is selected from the at least one local APN to activate the PDP/PDN context with reference to the wildcard subscription information. The user may subscribe to at least one local APN with the control node in this embodiment of the present invention, that is, when the user subscribes to a wildcard, the control node may select one APN from multiple locally provided local APNs, to activate the PDP/PDN context with reference to the wildcard subscription information. When configuring multiple local APNs for the user, the control node may further configure priorities of the APNs, so as to quickly specify an APN, for example, a local APN₁, a local APN₂, and a local APNₙ, and a local priority is configured for each local APN. When locally stored local APNs include at least a first local APN and a second local APN, and a priority of the first local APN is higher than a priority of the second local APN, specific implementation of selecting one local APN locally to activate the PDP/PDN context with reference to the wildcard subscription information may be: querying whether the first local APN exists in a second list of used local APNs; when it is found that the first local APN exists in the second list of used local APNs, querying whether the second local APN exists in the second list of used local APNs; when it is found that the second local APN does not exist in the second list of used local APNs, preferentially selecting the second local APN as an APN used to activate the PDP/PDN context with reference to the wildcard subscription information; activating the PDP/PDN context based on the second local APN with reference to the wildcard subscription information; and adding the second local APN to the second list of used local APNs.

In specific implementation, the first list of used local APNs mentioned above and the second list of used local APNs mentioned currently may be the same.

Further, optionally, when the matching requirement makes a requirement for a PDP type, a PDP address, and an APN, and it is found by means of analyzing that only one group of non-wildcard subscription information that meets the matching requirement exists, selection of subscription information is further improved in this embodiment of the present invention.

When a unique group of non-wildcard subscription information that meets the matching requirement exists, it is determined whether an APN included in the unique group of non-wildcard subscription information that meets the matching requirement is used. If it is determined that the APN included in the unique group of non-wildcard subscription information that meets the matching requirement is used, the group of subscription information that includes the unused default APN is preferentially selected from the at least one group of subscription information of the user to activate the PDP/PDN context. Although such a group of fully matched subscription information exists currently, an improvement in this embodiment of the present invention may further expand a scope of a service available to a user. In specific implementation, when at least two groups of subscription information that include default APNs exist in the subscription information received from the server, the control node needs to select a group of subscription information used to activate the PDP/PDN context from the at least two groups of subscription information. A method for selecting, by the control node, subscription information that includes a default APN may be the foregoing selection solution, which is not described in detail herein. Further, optionally, if it is found by means of confirmation that the subscription information that includes the unused default APN does not exist in the at least one group of subscription information, of the user, that is provided by the server, that is, subscription information that includes a default APN does not exist in the subscription information provided by the server, or subscription information that includes a default APN and is provided by the server is used, an operation of activating the PDP/PDN context may further be performed by using subscription information in the local APN subscription information queue. A method for selecting, by the control node, subscription information that includes a local APN may be the foregoing selection solution, which is not described in detail herein.

Further, optionally, if it is found by means of further confirmation that the subscription information that includes the unused local APN does not exist in the at least one group of subscription information, of the user, that is provided by the server, that is, subscription information that includes a local APN does not exist in the subscription information provided by the server, or subscription information that includes a local APN and is provided by the server is used, an operation of activating the PDP/PDN context may further be performed by using subscription information in the other APN subscription information queue. A method for selecting, by the control node, subscription information that includes an other APN may be the foregoing selection solution, which is not described in detail herein.

Further, optionally, if it is further confirmed that subscription information that includes an unused other APN does not exist, the PDP/PDN context may be activated based on the unique group of non-wildcard subscription information that meets the matching requirement.

According to the selection policies provided above, this embodiment of the present invention further provides several examples for actual illustration.

Example 1: The user has three groups of subscription information after subscribing to the server. APNs separately used by the three groups of subscription information are {APNa, APNb, APNc}. It is specified that the APNa and the APNb are default APNs, and the APNa has precedence over the APNb. In addition, no local APN is configured for the user locally. When the same user sequentially initiates an activation request in each scenario, a selection solution of the control node is shown in the following (it is considered herein that the foregoing subscription information meets a requirement, in the matching requirement, for a PDP type and a PDP address or a related requirement is not proposed in the matching requirement):
Scenario 1: The user initiates an activation request for the first time, and an APN is not specified in the matching requirement. After matching, subscription information that includes the APNa whose default priority is higher is finally selected to activate the PDP/PDN context.
Scenario 2: The user initiates an activation request for the second time, and an APN is not specified in the matching requirement. After matching, subscription information that includes the unused default APNb is finally selected to activate the PDP/PDN context.
Scenario 3: The user initiates an activation request for the third time, and an APNd is specified in the matching requirement. Then, the first time of matching fails. After correction, because all the default APNs are used, and no local APN exists for reference, subscription information that includes the APNc whose other priority is the highest is finally selected to activate the PDP/PDN context.

Example 2: The user has four groups of subscription information after subscribing to the server. APNs separately used by the four groups of subscription information are {APNa, APNb, APNc, *}, the APNb is a default APN, and * is a wildcard identifier of wildcard subscription information. In addition, two local APNs are configured for the user locally and are respectively a local APNa and a local APNc, and a priority of the local APNa is higher than a priority of the local APNc. When the same user sequentially initiates an activation request in each scenario, a selection solution of the control node is shown in the following (it is considered herein that the foregoing subscription information meets a requirement, in the matching requirement, for a PDP type and a PDP address or a related requirement is not proposed in the matching requirement):
Scenario 1: The user initiates an activation request for the first time, and an APN is not specified in the matching requirement. After matching, subscription information corresponding to the default APNb is finally selected to activate the PDP/PDN context.
Scenario 2: The user initiates an activation request for the second time, and an APN is not specified in the matching requirement. Because a default APNa is used, after matching, subscription information corresponding to the APNa whose local priority is higher is finally selected to activate the PDP/PDN context.
Scenario 3: The user initiates an activation request for the third time, and an APNd is specified in the matching requirement. Because neither the subscribed APNs nor the locally configured APNs include the APNd, the first time of matching fails. After correction, because the default APNa is used, subscription information corresponding to the APNc whose priority is the highest in an unused local APN is finally selected to activate the PDP/PDN context.

Example 3: The user has three groups of subscription information after subscribing to the server. APNs separately used by the three groups of subscription information are {APNa, APNb, APNc}, and no default APN exists. In addition, two local APNs are configured for the user locally and are respectively a local APNb and a local APNc, and a priority of the local APNb is higher than a priority of the local APNc. When the same user sequentially initiates an activation request in each scenario, a selection solution of the control node is shown in the following (it is considered herein that the foregoing subscription information meets a requirement, in the matching requirement, for a PDP type and a PDP address or a related requirement is not proposed in the matching requirement):
Scenario 1: The user initiates an activation request for the first time, and an APN is not specified in the matching requirement. After subscription matching, because no default APN exists, subscription information corresponding to the local APNb whose priority is higher is finally selected to activate the PDP/PDN context.
Scenario 2: The user initiates an activation request for the second time, and an APN is not specified in the matching requirement. After subscription matching, because no default APN exists, subscription information corresponding to the APNc whose priority is the highest in unused local APN is finally selected to activate the PDP/PDN context.
Scenario 3: The user initiates an activation request for the third time, and an APNd is specified in the matching requirement. Because neither the subscribed APNs nor the locally configured APNs include the APNd, the first time of matching fails. After correction, because neither a default APN nor an unused local APN exists, subscription information that includes the APNa in the other APN subscription information queue is finally selected to activate the PDP/PDN context.

Example 4: The user has four groups of subscription information after subscribing to the server. APNs separately used by the four groups of subscription information are {APNa, APNb, APNc, APNd}, the APNa and the APNb are default APNs and a priority of the default APNa is higher than a priority of the default APNb. In addition, two local APNs are configured for the user locally and are respectively a local APNb and a local APNd, and a priority of the local APNb is higher than a priority of the local APNd. When the same user sequentially initiates an activation request in each scenario, a selection solution of the control node is shown in the following (it is considered herein that the foregoing subscription information meets a requirement, in the matching requirement, for a PDP type and a PDP address or a related requirement is not proposed in the matching requirement):
Scenario 1: The user initiates an activation request for the first time, and an APN is not specified in the matching requirement. After subscription matching, subscription information corresponding to the APNa whose default priority is higher is finally selected to activate the PDP/PDN context.
Scenario 2: The user initiates an activation request for the second time, and an APN is not specified in the matching requirement. After subscription matching, subscription information corresponding to the unused default APNb is finally selected to activate the PDP/PDN context.
Scenario 3: The user initiates an activation request for the third time, and an APNe is specified in the matching requirement. Because neither the subscribed APNs nor the locally configured APNs include the APNe, the first time of matching fails. After correction, because no unused default APN exists, subscription information corresponding to the unused local APNd is finally selected to activate the PDP/PDN context.
Scenario 4: The user initiates an activation request for the fourth time, and an APNf is specified in the matching requirement. Because neither the subscribed APNs nor the locally configured APNs include the APNf, the first time of matching fails. After correction, because neither an unused default APN nor an unused local APN exists, subscription information, in the other APN subscription information queue, that includes the APNc is finally selected to activate the PDP/PDN context.

In a process in which the control node in the solutions in this embodiment of the present invention activates a PDP/PDN context, when obtained subscription information does not meet a matching requirement of a user for subscription information, subscription information that includes a default APN is preferentially used to activate the PDP/PDN context. In addition, when at least two groups of non-wildcard subscription information that meets the matching requirement exist, subscription information that includes an unused default APN is selected to activate the PDP/PDN context. Furthermore, when only wildcard subscription information that meets the matching requirement exists, an unused local APN is selected to activate the PDP/PDN context with reference to the wildcard subscription information. Therefore, when activating the PDP/PDN context for multiple times, the control node in this embodiment of the present invention can use subscription information that includes different APNs, so as to resolve a problem that a service type applied by the user is excessively undiversified due to repeat use of an APN, thereby expanding a scope of a service type available to the user, and improving an activation success rate and user satisfaction.

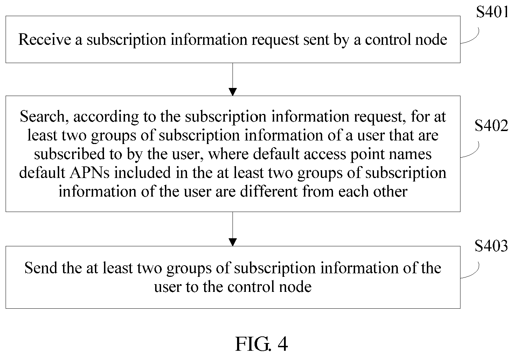

Referring to FIG. 4, FIG. 4 is a flowchart of a subscription information providing method according to an embodiment of the present invention. The subscription information providing method shown in FIG. 4 is described from a perspective of a server. As shown in FIG. 4, the subscription information providing method provided in this embodiment specifically includes the following steps.

Step S401: Receive a subscription information request sent by a control node.

Step S402: Search, according to the subscription information request, for at least two groups of subscription information of a user that are subscribed to by the user, where default access point names default APNs included in the at least two groups of subscription information of the user are different from each other.

Step S403: Send the at least two groups of subscription information of the user to the control node.

In this embodiment of the present invention, subscription information is generated when the user subscribes to the server, and specific implementation may include: receiving a subscription request of the user, and generating the subscription information of the user according to specified information.

In the prior art, in the subscription information generated by the server, an APN in only one group of subscription information is set as a default APN, which is improved in this embodiment of the present invention. The server may configure at least two default APNs different from each other, and generate corresponding subscription information. For example, when subscribing to the server, the user may subscribe to at least two default APNs. Accordingly, the server may generate at least two groups of subscription information. A default APN in any subscription information in the at least two groups of subscription information of the user is different from a default APN in other subscription information, and a priority is configured for each default APN. Further, optionally, the server may provide all generated subscription information for the control node, so that the control node selects a group of subscription information used to activate a PDP/PDN context. The subscription information provided by the server may include at least two groups of subscription information that include default APNs and other subscription information.

The server in this embodiment of the present invention can provide at least two groups of subscription information that include default APNs for a control node, so that the control node may preferentially select subscription information used to activate a PDP/PDN context. Because multiple default APNs may be specified in the server, a user may experience different services if the control node selects different subscription information that includes a default APN, so as to resolve a problem that a service type applied by the user is excessively undiversified due to repeat use of an APN, thereby expanding a scope of a service type available to the user, and further improving an activation success rate of activating the PDP/PDN context by the control node and user satisfaction.

Referring to FIG. 9, FIG. 9 is a structural diagram of a system according to an embodiment of the present invention. As shown in FIG. 9, the system provided in this embodiment of the present invention includes a control node 91 and a server 92. The control node 91 used in the system in this embodiment of the present invention is the control node 91 described in any one of FIG. 1a, FIG. 1b, FIG. 1c, FIG. 1d, FIG. 1e, FIG. 1f, FIG. 1g, or FIG. 1h. The control node 91 is corresponding to the packet data protocol context activation method shown in FIG. 3, and is an execution body based on the packet data protocol context activation method shown in FIG. 3. The server 92 used in the system in this embodiment of the present invention is the server 92 described in any one of FIG. 2a or FIG. 2b. The server 92 is corresponding to the subscription information providing method shown in FIG. 4, and is an execution body based on the subscription information providing method shown in FIG. 4.

The system may be used for a user to implement a packet data protocol context activation operation. Referring to FIG. 10, a specific implementation process in which the system in this embodiment of the present invention performs the packet data protocol context activation operation may include the following steps.

Step S101: The control node 91 sends a subscription information request to the server 92, where the subscription information request may carry a user identifier.

Step S102: The server 92 sends subscription information of the user to the control node 91, where the server 92 finds the subscription information of the user according to the user identifier, and the server may provide at least two groups of subscription information that include default APNs ({default APN1, default APN2, ..., default APNn}), and may further include a user subscription list (a PDP/PDN Type, a PDP/PDN Addr, an APN, and the like).

Step S103: The control node 91 selects subscription information according to an activation request of the user to activate a PDP/PDN context, where for a specific selection manner, reference may be made to content described in the foregoing steps S301 to S304, and details are not described herein.

The server in this embodiment of the present invention can provide at least two groups of subscription information that include default APNs for a control node, so that the control node may preferentially select subscription information used to activate a PDP/PDN context. Because multiple default APNs may be specified in the server, a user may experience different services if the control node selects different subscription information that includes a default APN. When activating the PDP/PDN context for multiple times, the control node in this embodiment of the present invention can use subscription information that includes different APNs, so as to resolve a problem that a service type applied by the user is excessively undiversified due to repeat use of an APN, thereby expanding a scope of a service type available to the user, and improving an activation success rate and user satisfaction.

Referring to FIG. 5a-1 and FIG. 5a-2 and FIG. 5b-1 and FIG. 5b-2, FIG. 5a-1 and FIG. 5a-2 and FIG. 5b-1 and FIG. 5b-2 are a schematic flowchart of an embodiment of the control node 91 in the system in this embodiment of the present invention. The figure shows a selection process in which after obtaining subscription information from the server 92 according to an activation request of a user, the control node 91 selects subscription information used to activate a PDP/PDN context. A specific process may include the following steps.

Step S501: Select subscription information according to a default APN subscription information queue, where when an APN is not indicated in a matching requirement, or subscription information that meets a matching requirement does not exist, available subscription information needs to be selected according to the default APN subscription information queue.

Step S502: Is Sub [x] successfully selected? If such Sub [x] is found, continue to perform step S503; or if such Sub [x] is not found, continue to perform step S509, where for a specific selection manner, reference may be made to content described in the foregoing, and details are not described herein.

Step S503: Is Act Flag True?

Step S504: Whether to enable a PDP/PDN correction repetition function? If the function needs to be enabled in this case, continue to perform step S505; or if it is detected that the function does not need to be enabled currently, continue to perform step S508.

Step S505: Select subscription information according to a local APN subscription information queue, where for a specific selection manner, reference may be made to content described in the foregoing, and details are not described herein.

Step S506: Is Sub [y] successfully selected and is Act Flag False? If such Sub [y] is successfully selected, continue to perform step S503; or if such Sub [y] is not successfully selected, continue to perform step S509.

Step S507: Use Sub [y].

Step S508: Use Sub [x].

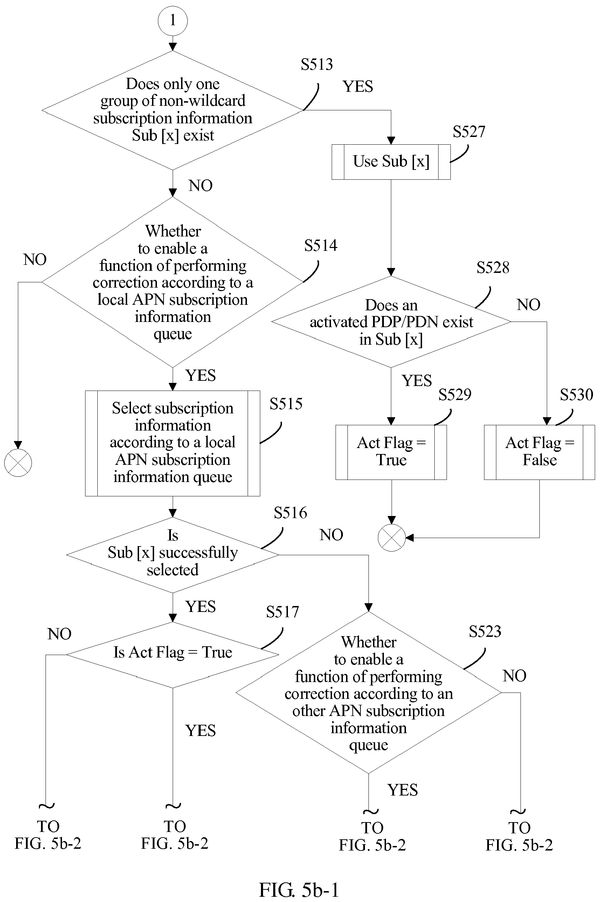

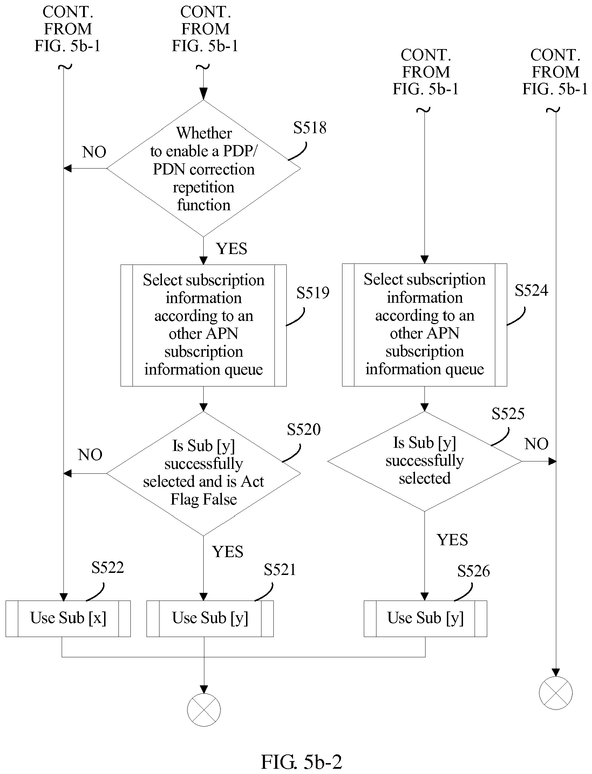

Step S509: Does wildcard subscription information Sub [x] exist? If it is determined that such wildcard subscription information Sub [x] exists, continue to perform step S510; or if it is determined that such wildcard subscription information Sub [x] does not exist, jump to step S513 shown in FIG. 5b-1.

Step S510: Use wildcard subscription information Sub [x].

Step S511: Select a used local APN according to a locally provided local APN, where for a specific selection manner, reference may be made to content described in the foregoing, and details are not described herein.

Step S512: Is local APN [y] successfully selected? If such local APN [y] is successfully selected, jump to an activation program, to activate a PDP/PDN context with reference to the wildcard subscription information by using this local APN [y]; if such local APN [y] is not successfully selected, consider that matching fails, and jump to a matching correction step.

Step S513: Does only one group of non-wildcard subscription information Sub [x] exist? If it is determined that only one group of non-wildcard subscription information Sub [x] exists, continue to perform step S527; or if it is determined that not only one group of non-wildcard subscription information Sub [x] exists, continue to perform step S514.

Step S514: Whether to enable a function of performing correction according to a local APN subscription information queue? If the function needs to be enabled in this case, continue to perform step S515; or if it is detected that the function does not need to be enabled currently, jump to another selection step.

Step S515: Select subscription information according to a local APN subscription information queue, where for a specific selection manner, reference may be made to content described in the foregoing, and details are not described herein.

Step S516: Is Sub [x] successfully selected? If such Sub [x] is successfully selected, continue to perform step S517; or if such Sub [x] is not successfully selected, continue to perform step S523.

Step S517: Is Act Flag = True? If a result of determining is yes, continue to perform step S518; or if a result of determining is no, continue to perform step S522.

Step S518: Whether to enable a PDP/PDN correction repetition function? If the function needs to be enabled in this case, continue to perform step S519; or if it is detected that the function does not need to be enabled currently, continue to perform step S522.

Step S519: Select subscription information according to an other APN subscription information queue, where for a specific selection manner, reference may be made to content described in the foregoing, and details are not described herein.

Step S520: Is Sub [y] successfully selected and is Act Flag False? If such Sub [y] is successfully selected, continue to perform step S521; or if such Sub [y] is not successfully selected, continue to perform step S522.

Step S521: Use Sub [y].

Step S522: Use Sub [x].

Step S523: Whether to enable a function of performing correction according to an other APN subscription information queue? If the function needs to be enabled in this case, continue to perform step S524; or if it is detected that the function does not need to be enabled currently, jump to another matching step or return to a failure.

Step S524: Select subscription information according to an other APN subscription information queue, where for a specific selection manner, reference may be made to content described in the foregoing, and details are not described herein.

Step S525: Is Sub [y] successfully selected? If such Sub [y] is successfully selected, continue to perform step S526; or if such Sub [y] is not successfully selected, jump to another matching step or return to a failure.

Step S526: Use Sub [y].

Step S527: Use Sub [x].

Step S528: Does an activated PDP/PDN exist in Sub [x]? If it is determined that such Sub [x] exists, continue to perform step S529; or if it is determined that such Sub [x] does not exist, jump to step S530 shown in FIG. 5b-1.

Step S529: Act Flag = True.

Step S530: Act Flag = False.

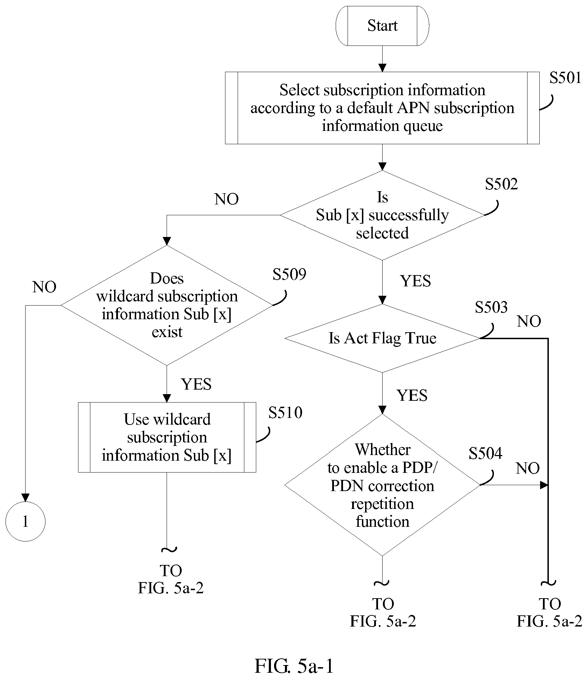

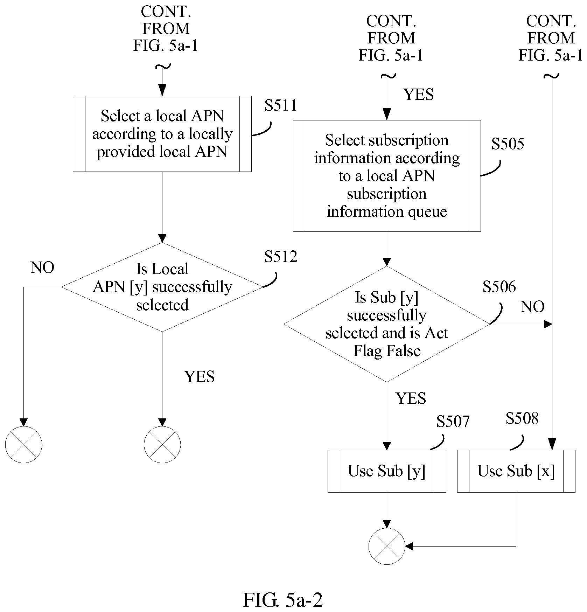

In the embodiment shown in FIG. 5, three switches are configured in the local control node, which are respectively a switch of a PDP/PDN correction repetition function, a switch of a function of performing correction according to a local APN subscription information queue, and a switch of a function of performing correction according to an other APN subscription information queue. The three switches function differently in positions shown in FIG. 5. The switch of the PDP/PDN correction repetition function is mainly used to ensure as much as possible that an APN of subscription information used for current activation is not repeatedly used, so as to expand a scope of a service type available to a user. Both the switch of the function of performing correction according to a local APN subscription information queue and the switch of the function of performing correction according to an other APN subscription information queue is further selection provided when matching correction is not successfully performed based on a previous-level list.

Referring to FIG. 6, FIG. 6 is a schematic flowchart of an embodiment of the control node 91 in the system in this embodiment of the present invention. The figure shows a specific process of selecting subscription information after the control node 91 determines to select subscription information that includes a default APN to activate a PDP/PDN context. A process in this embodiment may include the following steps. Step S601: Is k = 0? After subscription information is classified, a default APN subscription information queue may be obtained. Herein, k is a length of the default APN subscription information queue, and may also be a quantity of subscription information that includes a default APN. When it is determined that k = 0, which indicates that the current default APN subscription information queue is empty, jump to another selection step to consider subscription information in another subscription information queue; or when it is determined that k is not equal to 0, which indicates that the default APN subscription information queue is not empty, continue to perform step S602.

Step S602: i = i+1. This step is used to poll subscription information in the default APN subscription information queue to determine, with reference to steps S603 and S604, whether the subscription information in the default APN subscription information queue is used.

Step S603: Is i > k? If it is determined that i is greater than k, continue to perform step S607; or if it is determined that i is not greater than k, continue to perform step S604. Step S604: Does an activated PDP/PDN exist in Sub [i]? If it is determined that the activated PDP/PDN exists, which indicates that currently polled subscription information is used, return to perform step S602; or if it is determined that the activated PDP/PDN does not exist, which indicates that currently polled subscription information is not used, continue to perform step S605.

Step S605: Select Sub [i] subscription information.

Step S606: Act Flag = False.

Step S607: Select a group of subscription information from the queue, where the current selection may be performed based on preset information; for example, after considering that all subscription information appearing in the default APN subscription information queue is used, the control node selects subscription information located in a first place in the default APN subscription information queue. Step S608: Act Flag = True.

Referring to FIG. 7, FIG. 7 is a schematic flowchart of an embodiment of the control node 91 in the system in this embodiment of the present invention. The figure shows a specific process of selecting subscription information after the control node 91 determines to select subscription information that includes a local APN to activate a PDP/PDN context. Specifically, a process in this embodiment may include the following steps.

Step S701: Is m = 0? After subscription information is classified, a local APN subscription information queue may be obtained. Herein, m is a length of the local APN subscription information queue, and may also be a quantity of subscription information that includes a local APN. When it is determined that m = 0, which indicates that the current local APN subscription information queue is empty, jump to another selection step in this case to consider subscription information in another subscription information queue; or when it is determined that m is not equal to 0, which indicates that the local APN subscription information queue is not empty, continue to perform step S702.

Step S702: i = i + 1. This step is used to poll subscription information in the local APN subscription information queue to determine, with reference to steps S703 and S704, whether the subscription information in the local APN subscription information queue is used.

Step S703: Is i > m? If it is determined that i is greater than m, continue to perform step S706; or if it is determined that i is not greater than m, continue to perform step S704.

Step S704: Does local APN [i] used by an activated PDP/PDN exist? If it is determined that local APN [i] used by the activated PDP/PDN exists, which indicates that currently polled subscription information is used, return to perform step S702; or if it is determined that local APN [i] used by the activated PDP/PDN does not exist, which indicates that currently polled subscription information is not used, continue to perform step S705.

Step S705: Select local APN [i].

Step S706: Select an APN in the local APN subscription information queue.

Referring to FIG. 8A to FIG. 8C, FIG. 5 is a schematic flowchart of an embodiment of the control node 91 in the system in this embodiment of the present invention. The figure shows a process in which the control node 91 selects subscription information according to a matching requirement after a requirement for an APN is proposed in the matching requirement. Specifically, a process in this embodiment may include the following steps.

Step S801: Does subscription information Sub [x] whose APN is an APN requested by UE exist? If such subscription information Sub [x] exists, continue to perform step S802; or if it is determined that such subscription information Sub [x] does not exist, continue to perform step S809.

Step S802: Does an activated PDP/PDN exist in the subscription information? If a result of determining is yes, continue to perform step S803; or if a result of determining is no, continue to perform step S808.

Step S803: Whether to enable a PDP/PDN correction repetition function? Enabling of the PDP/PDN correction repetition function may expand a scope of a service type of a user. If enabling of the function is selected, continue to perform step S804; or if enabling of the function is not selected, continue to perform step S808.

Step S804: Ignore the APN requested by the UE.

Step S805: Perform a matching process in which the UE does not request an APN, that is, ignore a specified requirement for an APN in a matching requirement, and reserve only a specified requirement for a PDP address and a PDP type.

Step S806: Is Sub [y] successfully selected and is Act Flag False? This step is based on the foregoing solution in FIG. 6, that is, a group of subscription information that includes an unused APN is selected in a sequence from a default APN subscription information queue to a local APN subscription information queue, and then to an other APN subscription information queue. If such subscription information Sub [y] is successfully found, continue to perform step S807; or if such subscription information Sub [y] is not successfully found, continue to perform step S808.

Step S807: Use Sub [y].

Step S808: Use Sub [x].

Step S809: Does wildcard subscription information Sub [x] exist? If it is determined that the wildcard subscription information exists, continue to perform step S810; or if it is determined that the wildcard subscription information does not exist, continue to perform step S818.

Step S810: Does a PDP/PDN of an APN that is the same as the APN requested by the UE exist in the subscription information? If a result of determining is yes, continue to perform step S811; or if a result of determining is no, continue to perform step S816. Step S811: Whether to enable a PDP/PDN correction repetition function? If the function needs to be enabled in this case, continue to perform step S812; or if it is detected that the function does not need to be enabled currently, continue to perform step S816.

Step S812: Ignore the APN requested by the UE.

Step S813: Perform a matching process in which the UE does not request an APN. Step S814: Is Sub [y] successfully selected and is Act Flag False? This step is based on the foregoing solution in FIG. 6, that is, a group of subscription information that includes an unused APN is selected in a sequence from a default APN subscription information queue to a local APN subscription information queue, and then to an other APN subscription information queue. If such subscription information Sub [y] is successfully found, continue to perform step S815; or if such subscription information Sub [y] is not successfully found, continue to perform step S816.

Step S815: Use Sub [y].

Step S816: Use Sub [x].

Step S817: Use the APN requested by the UE as a used APN.

Step S818: Whether to enable a user request information correction function? If the function needs to be enabled in this case, continue to perform step S819; or if it is detected that the function does not need to be enabled currently, jump to a matching correction step performed in an unsuccessful matching scenario.

Step S819: Ignore the APN requested by the UE.

Step S820: Perform a matching process in which the UE does not request an APN.

Step S821: Is Sub [y] successfully selected? This step is based on the foregoing solution in FIG. 6, that is, a group of subscription information that includes an unused APN is selected in a sequence from a default APN subscription information queue to a local APN subscription information queue, and then to an other APN subscription information queue. If such subscription information Sub [y] is successfully found, continue to perform step S822; or if such subscription information Sub [y] is not successfully found, jump to a matching correction step performed in an unsuccessful matching scenario.

Step S822: Use Sub [y].

Referring to FIG. 11, FIG. 11 is a structural diagram of another control node according to an embodiment of the present invention. The control node provided in this embodiment is corresponding to the packet data protocol context activation method shown in FIG. 3, and is an execution body based on the packet data protocol context activation method shown in FIG. 3. A specific implementation form is shown in FIG. 11. The call message processing apparatus provided in this embodiment includes: an input apparatus 111, an output apparatus 112, a memory 113, and a processor 114. The memory 113 stores a group of program code, and the processor 114 is configured to invoke the program code stored in the memory 113 to perform the following operations:
obtaining at least one group of subscription information of a user;
preferentially selecting, when subscription information that meets a matching requirement does not exist, a group of subscription information that includes an unused default access point name default APN from the at least one group of subscription information of the user, to activate a packet data protocol PDP/PDN context;
when at least two groups of non-wildcard subscription information that meets the matching requirement exist, preferentially selecting a group of subscription information that includes an unused default APN from the at least two groups of non-wildcard subscription information that meets the matching requirement, to activate the PDP/PDN context; and
when only wildcard subscription information that meets the matching requirement exists, selecting one unused local APN from at least one local APN, to activate the PDP/PDN context with reference to the wildcard subscription information.

In an optional implementation manner, after obtaining the at least one group of subscription information of the user, the processor 114 is further configured to perform any one of the following steps:
extracting subscription information that includes a default APN from the at least one group of subscription information of the user, and adding the subscription information that includes the default APN to a default APN subscription information queue;
extracting subscription information consistent with the at least one local APN from subscription information remaining after the extraction of the subscription information that includes the default APN, and adding the subscription information consistent with the at least one local APN to a local APN subscription information queue; and
adding, to an other APN subscription information queue, non-wildcard subscription information remaining after the extraction of the subscription information consistent with the at least one local APN.

In an optional implementation manner, the default APN subscription information queue includes at least first default APN subscription information and second default APN subscription information, and a priority of the first default APN is higher than a priority of the second default APN; and
that the processor 114 performs preferentially selecting, when subscription information that meets a matching requirement does not exist, a group of subscription information that includes an unused default access point name default APN from the at least one group of subscription information of the user, to activate a packet data protocol PDP/packet data network PDN context includes:
   querying whether the default APN in the first default APN subscription information exists in a list of used default APNs;
   when finding that the default APN in the first default APN subscription information exists in the list of used default APNs, querying whether the default APN in the second default APN subscription information exists in the list of used default APNs;
   when finding that the default APN in the second default APN subscription information does not exist in the list of used default APNs, preferentially selecting the second default APN subscription information as subscription information used to activate the PDP/PDN context;
   activating the PDP/PDN context according to the second default APN subscription information; and
   adding the default APN in the second default APN subscription information to the list of used default APNs.

In an optional implementation manner, after preferentially selecting the group of subscription information that includes the unused default access point name default APN from the at least one group of subscription information of the user, to activate the packet data protocol PDP/PDN context, the processor 114 is further configured to perform the following step:
when the subscription information that includes the unused default APN does not exist in the at least one group of subscription information of the user, selecting a piece of subscription information consistent with the unused local APN from the local APN subscription information queue, to activate the PDP/PDN context. In an optional implementation manner, the local APN subscription information queue includes at least first local APN subscription information and second local APN subscription information, and a priority of the first local APN is higher than a priority of the second local APN; and

that the processor 114 performs selecting subscription information consistent with the unused local APN, to activate the PDP/PDN context includes:
querying whether the local APN in the first local APN subscription information exists in a first list of used local APNs;
when finding that the local APN in the first local APN subscription information exists in the first list of used local APNs, querying whether the local APN in the second local APN subscription information exists in the first list of used local APNs;
when finding that the local APN in the second local APN subscription information does not exist in the first list of used local APNs, selecting the second local APN subscription information as subscription information used to activate the PDP/PDN context;
activating the PDP/PDN context according to the second local APN subscription information; and
adding the local APN in the second local APN subscription information to the first list of used local APNs.

In an optional implementation manner, after selecting the piece of subscription information consistent with the unused local APN from the local APN subscription information queue, to activate the PDP/PDN context, the processor 114 is further configured to perform the following step:
when the subscription information consistent with the unused local APN does not exist, selecting a group of subscription information that includes an unused other APN from the other APN subscription information queue, to activate the PDP/PDN context.

In an optional implementation manner, the other APN subscription information queue includes at least first other APN subscription information and second other APN subscription information, and a priority of the first other APN is higher than a priority of the second other APN; and
that the processor 114 performs selecting a group of subscription information that includes an unused other APN from the other APN subscription information queue, to activate the PDP/PDN context includes:
   querying whether the other APN in the first other APN subscription information exists in a list of used other APNs;
   when finding that the other APN in the first other APN subscription information exists in the list of used other APNs, querying whether the other APN in the second other APN subscription information exists in the list of used other APNs;
   when finding that the other APN in the second other APN subscription information does not exist in the list of used other APNs, selecting the second other APN subscription information as subscription information used to activate the PDP/PDN context;
   activating the PDP/PDN context according to the second other APN subscription information; and
   adding the other APN in the second other APN subscription information to the list of used other APNs.

In an optional implementation manner, that the processor 114 performs obtaining at least one group of subscription information of a user includes:
sending a subscription information request to a server; and
receiving at least two groups of subscription information of the user that are sent by the server, where a default APN in any subscription information in the at least two groups of subscription information of the user is different from a default APN in other subscription information.

In an optional implementation manner, the matching requirement includes one or more of a PDP type or a PDP address;
after preferentially selecting the group of subscription information that includes the unused default APN from the at least two groups of non-wildcard subscription information that meets the matching requirement, to activate the PDP/PDN context, the processor 114 is further configured to perform the following step:
   when the subscription information that includes the unused default APN does not exist in the at least two groups of non-wildcard subscription information that meets matching requirement, selecting a piece of subscription information consistent with the unused local APN from the at least one group of subscription information of the user, to activate the PDP/PDN context; and
   after selecting the piece of subscription information consistent with the unused local APN, to activate the PDP/PDN context, the processor 114 is further configured to perform the following step:

   when the subscription information consistent with the unused local APN does not exist, selecting a group of subscription information that includes an unused other APN from the at least one group of subscription information of the user, to activate the PDP/PDN context.

In an optional implementation manner, the at least one local APN includes at least a first local APN and a second local APN, and a priority of the first local APN is higher than a priority of the second local APN;
that the processor 114 selects one unused local APN from at least one local APN includes:
   querying whether the first local APN exists in a second list of used local APNs;
   when finding that the first local APN exists in the second list of used local APNs, querying whether the second local APN exists in the second list of used local APNs; and
   when finding that the second local APN does not exist in the second list of used local APNs, preferentially selecting the second local APN as an APN used to activate the PDP/PDN context with reference to the wildcard subscription information; and
that the processor 114 activates the PDP/PDN context with reference to the wildcard subscription information includes:
   activating the PDP/PDN context based on the second local APN with reference to the wildcard subscription information; and
adding the second local APN to the second list of used local APNs.

In an optional implementation manner, after obtaining the at least one group of subscription information of the user, the processor 114 is further configured to perform the following steps:
when a unique group of non-wildcard subscription information that meets the matching requirement exists, determining whether an APN included in the unique group of non-wildcard subscription information that meets the matching requirement is used, and
if determining that the APN included in the unique group of non-wildcard subscription information that meets the matching requirement is used, preferentially selecting the group of subscription information that includes the unused default APN from the at least one group of subscription information of the user, to activate the PDP/PDN context; and
when the subscription information that includes the unused default APN does not exist in the at least one group of subscription information of the user, selecting a piece of subscription information consistent with the unused local APN from the at least one group of subscription information of the user, to activate the PDP/PDN context;
after selecting the piece of subscription information consistent with the unused local APN from the at least one group of subscription information of the user, to activate the PDP/PDN context, the processor 114 is further configured to perform the following step:
when the subscription information consistent with the unused local APN does not exist in the at least one group of subscription information of the user, selecting a group of subscription information that includes an unused other APN from the at least one group of subscription information of the user, to activate the PDP/PDN context; and
after selecting the group of subscription information that includes the unused other APN from the at least one group of subscription information of the user, to activate the PDP/PDN context, the processor 114 is further configured to perform the following step:
   when the subscription information that includes the unused other APN does not exist in the at least one group of subscription information of the user, activating the PDP/PDN context based on the unique group of non-wildcard subscription information that meets the matching requirement.

Referring to FIG. 12, FIG. 12 is a structural diagram of another server according to an embodiment of the present invention. The server provided in this embodiment is corresponding to the subscription information providing method shown in FIG. 4, and is an execution body based on the subscription information providing method shown in FIG. 4. A specific implementation form is shown in FIG. 12. The called client provided in this embodiment includes: an input apparatus 121, an output apparatus 122, a memory 123, and a processor 124. The memory 123 stores a group of program code, and the processor 124 is configured to invoke the program code stored in the memory 123 to perform the following operations:
receiving a subscription information request sent by a control node;
searching, according to the subscription information request, for at least two groups of subscription information of a user that are subscribed to by the user, where default access point names default APNs included in the at least two groups of subscription information of the user are different from each other; and
sending the at least two groups of subscription information of the user to the control node.

In an optional implementation manner, before the receiving a subscription information request sent by a control node, the processor 124 is further configured to perform the following steps:
receiving a subscription request of the user, where the subscription request carries specified information of at least two default APNs that are different from each other; and
generating the at least two groups of subscription information of the user according to the specified information, where a default APN in any subscription information in the at least two groups of subscription information of the user is different from a default APN in other subscription information.

In the several embodiments provided in this application, it should be understood that the disclosed apparatus and method may be implemented in other manners. For example, the described apparatus embodiment is merely exemplary. For example, the module or unit division is merely logical function division and may be other division in actual implementation. For example, multiple units or modules may be combined or integrated into another system, or some features may be ignored or not performed. In addition, the displayed or discussed mutual couplings or direct couplings or communication connections may be implemented through some interfaces. The indirect couplings or communication connections between the apparatuses, modules, or units may be implemented in electronic, mechanical, or other forms.

The modules or units described as separate parts may or may not be physically separate, and parts displayed as modules or units may or may not be physical modules or units, may be located in one position, or may be distributed on multiple network modules or units. Some or all of the modules or units may be selected according to actual needs to achieve the objectives of the solutions of the embodiments of this application.

In addition, functional modules or units in the embodiments of this application may be integrated into one processing module or unit, or each of the modules or units may exist alone physically, or two or more modules or units are integrated into one module or unit. The integrated modules or units may be implemented in a form of hardware, or may be implemented in a form of a software functional unit.

When the integrated module or unit is implemented in the form of a software functional module or unit and sold or used as an independent product, the integrated module or unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of this application, but are not intended to limit the protection scope of this application. Any modification or replacement readily figured out by persons skilled in the art within the technical scope disclosed in this application shall fall within the protection scope of this application. Therefore, the protection scope of this application shall be subject to the protection scope of the claims.

## Claims

1. A control node, comprising:
an obtaining module, configured to obtain at least one group of subscription information of a user;
a first activation module, configured to: when subscription information that meets a matching requirement does not exist, preferentially select a group of subscription information that comprises an unused default access point name default APN from the at least one group of subscription information of the user, to activate a packet data protocol PDP/packet data network PDN context;
a second activation module, configured to: when at least two groups of non-wildcard subscription information that meets the matching requirement exist, preferentially select a group of subscription information that comprises an unused default APN from the at least two groups of non-wildcard subscription information that meets the matching requirement, to activate the PDP/PDN context; and
a third activation module, configured to: when only wildcard subscription information that meets the matching requirement exists, select one unused local APN from at least one local APN, to activate the PDP/PDN context with reference to the wildcard subscription information.

2. The control node according to claim 1, further comprising:
an adding module, configured to: extract subscription information that comprises a default APN from the at least one group of subscription information of the user, and add the subscription information that comprises the default APN to a default APN subscription information queue, wherein
the adding module is further configured to: extract subscription information consistent with the at least one local APN from subscription information remaining after the extraction of the subscription information that comprises the default APN, and add the subscription information consistent with the at least one local APN to a local APN subscription information queue; and
the adding module is further configured to add, to an other APN subscription information queue, non-wildcard subscription information remaining after the extraction of the subscription information consistent with the at least one local APN.

3. The control node according to claim 2, wherein the default APN subscription information queue comprises at least first default APN subscription information and second default APN subscription information, and a priority of a first default APN is higher than a priority of a second default APN; and
the first activation module comprises:
a first query unit, configured to query whether the default APN in the first default APN subscription information exists in a list of used default APNs, wherein
the first query unit is further configured to: when finding that the default APN in the first default APN subscription information exists in the list of used default APNs, query whether the default APN in the second default APN subscription information exists in the list of used default APNs; and
the first query unit is further configured to: when finding that the default APN in the second default APN subscription information does not exist in the list of used default APNs, send a first selection prompt message to a first selection unit;
the first selection unit, configured to: after receiving the first selection prompt message, preferentially select the second default APN subscription information as subscription information used to activate the PDP/PDN context;
a first activation unit, configured to activate the PDP/PDN context according to the second default APN subscription information; and
a first adding unit, configured to add the default APN in the second default APN subscription information to the list of used default APNs.

4. The control node according to claim 2, wherein
the first activation module is further configured to: when the subscription information that comprises the unused default APN does not exist in the at least one group of subscription information of the user, select a piece of subscription information consistent with the unused local APN from the local APN subscription information queue, to activate the PDP/PDN context.

5. The control node according to claim 4, wherein the local APN subscription information queue comprises at least first local APN subscription information and second local APN subscription information, and a priority of a first local APN is higher than a priority of a second local APN; and
the first activation module comprises:
a second query unit, configured to query whether the local APN in the first local APN subscription information exists in a first list of used local APNs, wherein
the second query unit is further configured to: when finding that the local APN in the first local APN subscription information exists in the first list of used local APNs, query whether the local APN in the second local APN subscription information exists in the first list of used local APNs; and
the second query unit is further configured to: when finding that the local APN in the second local APN subscription information does not exist in the first list of used local APNs, send a second selection prompt message to a second selection unit;
the second selection unit, configured to: after receiving the second selection prompt message, select the second local APN subscription information as subscription information used to activate the PDP/PDN context;
a second activation unit, configured to activate the PDP/PDN context according to the second local APN subscription information; and
a second adding unit, configured to add the local APN in the second local APN subscription information to the first list of used local APNs.

6. The control node according to claim 4, wherein
the first activation module is further configured to: when the subscription information consistent with the unused local APN does not exist, select a group of subscription information that comprises an unused other APN from the other APN subscription information queue, to activate the PDP/PDN context.

7. The control node according to claim 6, wherein the other APN subscription information queue comprises at least first other APN subscription information and second other APN subscription information, and a priority of a first other APN is higher than a priority of a second other APN; and
the first activation module comprises:
a third query unit, configured to query whether the other APN in the first other APN subscription information exists in a list of used other APNs, wherein
the third query unit is further configured to: when finding that the other APN in the first other APN subscription information exists in the list of used other APNs, query whether the other APN in the second other APN subscription information exists in the list of used other APNs; and
the third query unit is further configured to: when finding that the other APN in the second other APN subscription information does not exist in the list of used other APNs, send a third selection prompt message to a third selection unit;
the third selection unit, configured to: after receiving the third selection prompt message, select the second other APN subscription information as subscription information used to activate the PDP/PDN context;
a third activation unit, configured to activate the PDP/PDN context according to the second other APN subscription information; and
a third adding unit, configured to add the other APN in the second other APN subscription information to the list of used other APNs.

8. The control node according to claim 1, wherein the obtaining module comprises:
a sending unit, configured to send a subscription information request to a server; and
a receiving unit, configured to receive at least two groups of subscription information of the user that are sent by the server, wherein a default APN in any subscription information in the at least two groups of subscription information of the user is different from a default APN in other subscription information.

9. The control node according to claim 2, wherein the matching requirement comprises one or more of a PDP type or a PDP address;
the second activation module is further configured to: when the subscription information that comprises the unused default APN does not exist in the at least two groups of non-wildcard subscription information that meets the matching requirement, select a piece of subscription information consistent with the unused local APN from the at least one group of subscription information of the user, to activate the PDP/PDN context; and
the second activation module is further configured to: when the subscription information consistent with the unused local APN does not exist, select a group of subscription information that comprises an unused other APN from the at least one group of subscription information of the user, to activate the PDP/PDN context.

10. The control node according to claim 1, wherein the at least one local APN comprises at least a first local APN and a second local APN, and a priority of the first local APN is higher than a priority of the second local APN; and
the third activation module comprises:
a fourth query unit, configured to query whether the first local APN exists in a second list of used local APNs, wherein
the fourth query unit is further configured to: when finding that the first local APN exists in the second list of used local APNs, query whether the second local APN exists in the second list of used local APNs; and
the fourth query unit is further configured to: when finding that the second local APN does not exist in the second list of used local APNs, send a fourth selection prompt message to a fourth selection unit;
the fourth selection unit, configured to: after receiving the fourth selection prompt message, preferentially select the second local APN as an APN used to activate the PDP/PDN context with reference to the wildcard subscription information;
a fourth activation unit, configured to activate the PDP/PDN context based on the second local APN with reference to the wildcard subscription information; and
a fourth adding unit, configured to add the second local APN to the second list of used local APNs.

11. The control node according to claim 2, wherein an APN type comprises a default APN, a local APN, and an other APN, and the control node further comprises:
a determining module, configured to: when a unique group of non-wildcard subscription information that meets the matching requirement exists, determine whether an APN comprised in the unique group of non-wildcard subscription information that meets the matching requirement is used, and when determining that the APN comprised in the unique group of non-wildcard subscription information that meets the matching requirement is used, send a reselection prompt message to a fourth activation module; and
the fourth activation module, configured to: after receiving the reselection prompt message sent by the determining module, preferentially select the group of subscription information that comprises the unused default APN from the at least one group of subscription information of the user, to activate the PDP/PDN context, wherein
the fourth activation module is further configured to: when the subscription information that comprises the unused default APN does not exist in the at least one group of subscription information of the user, select a piece of subscription information consistent with the unused local APN from the at least one group of subscription information of the user, to activate the PDP/PDN context;
the fourth activation module is further configured to: when the subscription information consistent with the unused local APN does not exist in the at least one group of subscription information of the user, select a group of subscription information that comprises an unused other APN from the at least one group of subscription information of the user, to activate the PDP/PDN context; and
the fourth activation module is further configured to: when the subscription information that comprises the unused other APN does not exist in the at least one group of subscription information of the user, activate the PDP/PDN context based on the unique group of non-wildcard subscription information that meets the matching requirement.

12. A server, comprising:
a receiving module, configured to receive a subscription information request sent by a control node;
a searching module, configured to search, according to the subscription information request, for at least two groups of subscription information of a user that are subscribed to by the user, wherein default access point names default APNs comprised in the at least two groups of subscription information of the user are different from each other; and
a sending module, configured to send the at least two groups of subscription information of the user to the control node.

13. The server according to claim 12, further comprising:
the receiving module, further configured to receive a subscription request of the user, wherein the subscription request carries specified information of at least two default APNs that are different from each other; and
a generation module, configured to generate the at least two groups of subscription information of the user according to the specified information, wherein a default APN in any subscription information in the at least two groups of subscription information of the user is different from a default APN in other subscription information.

14. A PDP/PDN context activation method, comprising:
obtaining at least one group of subscription information of a user;
preferentially selecting, when subscription information that meets a matching requirement does not exist, a group of subscription information that comprises an unused default access point name default APN from the at least one group of subscription information of the user, to activate a packet data protocol PDP/packet data network PDN context;
when at least two groups of non-wildcard subscription information that meets the matching requirement exist, preferentially selecting a group of subscription information that comprises an unused default APN from the at least two groups of non-wildcard subscription information that meets the matching requirement, to activate the PDP/PDN context; and
when only wildcard subscription information that meets the matching requirement exists, selecting one unused local APN from at least one local APN, to activate the PDP/PDN context with reference to the wildcard subscription information.

15. The method according to claim 14, wherein after the obtaining at least one group of subscription information of a user, the method further comprises any one of the following steps:
extracting subscription information that comprises a default APN from the at least one group of subscription information of the user, and adding the subscription information that comprises the default APN to a default APN subscription information queue;
extracting subscription information consistent with the at least one local APN from subscription information remaining after the extraction of the subscription information that comprises the default APN, and adding the subscription information consistent with the at least one local APN to a local APN subscription information queue; and
adding, to an other APN subscription information queue, non-wildcard subscription information remaining after the extraction of the subscription information consistent with the at least one local APN.

16. The method according to claim 15, wherein the default APN subscription information queue comprises at least first default APN subscription information and second default APN subscription information, and a priority of the first default APN is higher than a priority of the second default APN; and
the preferentially selecting, when subscription information that meets a matching requirement does not exist, a group of subscription information that comprises an unused default access point name default APN from the at least one group of subscription information of the user, to activate a packet data protocol PDP/PDN context comprises:
querying whether the default APN in the first default APN subscription information exists in a list of used default APNs;
when it is found that the default APN in the first default APN subscription information exists in the list of used default APNs, querying whether the default APN in the second default APN subscription information exists in the list of used default APNs;
when it is found that the default APN in the second default APN subscription information does not exist in the list of used default APNs, preferentially selecting the second default APN subscription information as subscription information used to activate the PDP/PDN context;
activating the PDP/PDN context according to the second default APN subscription information; and
adding the default APN in the second default APN subscription information to the list of used default APNs.

17. The method according to claim 15, wherein after the preferentially selecting a group of subscription information that comprises an unused default access point name default APN from the at least one group of subscription information of the user, to activate a packet data protocol PDP/PDN context, the method further comprises:
when the subscription information that comprises the unused default APN does not exist in the at least one group of subscription information of the user, selecting a piece of subscription information consistent with the unused local APN from the local APN subscription information queue, to activate the PDP/PDN context.

18. The method according to claim 17, wherein the local APN subscription information queue comprises at least first local APN subscription information and second local APN subscription information, and a priority of the first local APN is higher than a priority of the second local APN; and
the selecting subscription information consistent with the unused local APN, to activate the PDP/PDN context comprises:
querying whether the local APN in the first local APN subscription information exists in a first list of used local APNs;
when it is found that the local APN in the first local APN subscription information exists in the first list of used local APNs, querying whether the local APN in the second local APN subscription information exists in the first list of used local APNs;
when it is found that the local APN in the second local APN subscription information does not exist in the first list of used local APNs, selecting the second local APN subscription information as subscription information used to activate the PDP/PDN context;
activating the PDP/PDN context according to the second local APN subscription information; and
adding the local APN in the second local APN subscription information to the first list of used local APNs.

19. The method according to claim 17, wherein after the selecting a piece of subscription information consistent with the unused local APN from the local APN subscription information queue, to activate the PDP/PDN context, the method further comprises:
when the subscription information consistent with the unused local APN does not exist, selecting a group of subscription information that comprises an unused other APN from the other APN subscription information queue, to activate the PDP/PDN context.

20. The method according to claim 19, wherein the other APN subscription information queue comprises at least first other APN subscription information and second other APN subscription information, and a priority of the first other APN is higher than a priority of the second other APN; and
the selecting a group of subscription information that comprises an unused other APN from the other APN subscription information queue, to activate the PDP/PDN context comprises:
querying whether the other APN in the first other APN subscription information exists in a list of used other APNs;
when it is found that the other APN in the first other APN subscription information exists in the list of used other APNs, querying whether the other APN in the second other APN subscription information exists in the list of used other APNs;
when it is found that the other APN in the second other APN subscription information does not exist in the list of used other APNs, selecting the second other APN subscription information as subscription information used to activate the PDP/PDN context;
activating the PDP/PDN context according to the second other APN subscription information; and
adding the other APN in the second other APN subscription information to the list of used other APNs.

21. The method according to claim 14, wherein the obtaining at least one group of subscription information of a user comprises:
sending a subscription information request to a server; and
receiving at least two groups of subscription information of the user that are sent by the server, wherein a default APN in any subscription information in the at least two groups of subscription information of the user is different from a default APN in other subscription information.

22. The method according to claim 15, wherein the matching requirement comprises one or more of a PDP type or a PDP address;
after the preferentially selecting a group of subscription information that comprises an unused default APN from the at least two groups of non-wildcard subscription information that meets the matching requirement, to activate the PDP/PDN context, the method further comprises:
when the subscription information that comprises the unused default APN does not exist in the at least two groups of non-wildcard subscription information that meets matching requirement, selecting a piece of subscription information consistent with the unused local APN from the at least one group of subscription information of the user, to activate the PDP/PDN context; and
after the selecting a piece of subscription information consistent with the unused local APN, to activate the PDP/PDN context, the method further comprises:
when the subscription information consistent with the unused local APN does not exist, selecting a group of subscription information that comprises an unused other APN from the at least one group of subscription information of the user, to activate the PDP/PDN context.

23. The method according to claim 14, wherein the at least one local APN comprises at least a first local APN and a second local APN, and a priority of the first local APN is higher than a priority of the second local APN;
the selecting one unused local APN from at least one local APN comprises:
querying whether the first local APN exists in a second list of used local APNs;
when it is found that the first local APN exists in the second list of used local APNs, querying whether the second local APN exists in the second list of used local APNs; and
when it is found that the second local APN does not exist in the second list of used local APNs, preferentially selecting the second local APN as an APN used to activate the PDP/PDN context with reference to the wildcard subscription information; and
the activating the PDP/PDN context with reference to the wildcard subscription information comprises:
activating the PDP/PDN context based on the second local APN with reference to the wildcard subscription information; and
adding the second local APN to the second list of used local APNs.

24. The method according to claim 15, wherein after the obtaining at least one group of subscription information of a user, the method further comprises:
when a unique group of non-wildcard subscription information that meets the matching requirement exists, determining whether an APN comprised in the unique group of non-wildcard subscription information that meets the matching requirement is used, and
if it is determined that the APN comprised in the unique group of non-wildcard subscription information that meets the matching requirement is used, preferentially selecting the group of subscription information that comprises the unused default APN from the at least one group of subscription information of the user, to activate the PDP/PDN context; and
when the subscription information that comprises the unused default APN does not exist in the at least one group of subscription information of the user, selecting a piece of subscription information consistent with the unused local APN from the at least one group of subscription information of the user, to activate the PDP/PDN context;
after the selecting a piece of subscription information consistent with the unused local APN from the at least one group of subscription information of the user, to activate the PDP/PDN context, the method further comprises:
when the subscription information consistent with the unused local APN does not exist in the at least one group of subscription information of the user, selecting a group of subscription information that comprises an unused other APN from the at least one group of subscription information of the user, to activate the PDP/PDN context; and
after the selecting a group of subscription information that comprises an unused other APN from the at least one group of subscription information of the user, to activate the PDP/PDN context, the method further comprises:
when the subscription information that comprises the unused other APN does not exist in the at least one group of subscription information of the user, activating the PDP/PDN context based on the unique group of non-wildcard subscription information that meets the matching requirement.

25. A subscription information providing method, comprising:
receiving a subscription information request sent by a control node;
searching, according to the subscription information request, for at least two groups of subscription information of a user that are subscribed to by the user, wherein default access point names default APNs comprised in the at least two groups of subscription information of the user are different from each other; and
sending the at least two groups of subscription information of the user to the control node.

26. The method according to claim 25, wherein before the receiving a subscription information request sent by a control node, the method further comprises:
receiving a subscription request of the user, wherein the subscription request carries specified information of at least two default APNs that are different from each other; and
generating the at least two groups of subscription information of the user according to the specified information, wherein a default APN in any subscription information in the at least two groups of subscription information of the user is different from a default APN in other subscription information.

27. A control node, comprising: an input apparatus, an output apparatus, a memory, and a processor, wherein the memory stores a group of program code, and the processor is configured to invoke the program code stored in the memory to perform the following operations:
obtaining at least one group of subscription information of a user;
preferentially selecting, when subscription information that meets a matching requirement does not exist, a group of subscription information that comprises an unused default access point name default APN from the at least one group of subscription information of the user, to activate a packet data protocol PDP/PDN context;
when at least two groups of non-wildcard subscription information that meets the matching requirement exist, preferentially selecting a group of subscription information that comprises an unused default APN from the at least two groups of non-wildcard subscription information that meets the matching requirement, to activate the PDP/PDN context; and
when only wildcard subscription information that meets the matching requirement exists, selecting one unused local APN from at least one local APN, to activate the PDP/PDN context with reference to the wildcard subscription information.

28. The method according to claim 27, wherein after obtaining the at least one group of subscription information of the user, the processor is further configured to perform any one of the following steps:
extracting subscription information that comprises a default APN from the at least one group of subscription information of the user, and adding the subscription information that comprises the default APN to a default APN subscription information queue;
extracting subscription information consistent with the at least one local APN from subscription information remaining after the extraction of the subscription information that comprises the default APN, and adding the subscription information consistent with the at least one local APN to a local APN subscription information queue; and
adding, to an other APN subscription information queue, non-wildcard subscription information remaining after the extraction of the subscription information consistent with the at least one local APN.

29. The method according to claim 28, wherein the default APN subscription information queue comprises at least first default APN subscription information and second default APN subscription information, and a priority of the first default APN is higher than a priority of the second default APN; and
that the processor performs preferentially selecting, when subscription information that meets a matching requirement does not exist, a group of subscription information that comprises an unused default access point name default APN from the at least one group of subscription information of the user, to activate a packet data protocol PDP/PDN context comprises:
querying whether the default APN in the first default APN subscription information exists in a list of used default APNs;
when finding that the default APN in the first default APN subscription information exists in the list of used default APNs, querying whether the default APN in the second default APN subscription information exists in the list of used default APNs;
when finding that the default APN in the second default APN subscription information does not exist in the list of used default APNs, preferentially selecting the second default APN subscription information as subscription information used to activate the PDP/PDN context;
activating the PDP/PDN context according to the second default APN subscription information; and
adding the default APN in the second default APN subscription information to the list of used default APNs.

30. The method according to claim 28, wherein after preferentially selecting the group of subscription information that comprises the unused default access point name default APN from the at least one group of subscription information of the user, to activate the packet data protocol PDP/PDN context, the processor is further configured to perform the following step:
when the subscription information that comprises the unused default APN does not exist in the at least one group of subscription information of the user, selecting a piece of subscription information consistent with the unused local APN from the local APN subscription information queue, to activate the PDP/PDN context.

31. The method according to claim 30, wherein the local APN subscription information queue comprises at least first local APN subscription information and second local APN subscription information, and a priority of the first local APN is higher than a priority of the second local APN; and
that the processor performs selecting subscription information consistent with the unused local APN, to activate the PDP/PDN context comprises:
querying whether the local APN in the first local APN subscription information exists in a first list of used local APNs;
when finding that the local APN in the first local APN subscription information exists in the first list of used local APNs, querying whether the local APN in the second local APN subscription information exists in the first list of used local APNs;
when finding that the local APN in the second local APN subscription information does not exist in the first list of used local APNs, selecting the second local APN subscription information as subscription information used to activate the PDP/PDN context;
activating the PDP/PDN context according to the second local APN subscription information; and
adding the local APN in the second local APN subscription information to the first list of used local APNs.

32. The method according to claim 30, wherein after selecting the piece of subscription information consistent with the unused local APN from the local APN subscription information queue, to activate the PDP/PDN context, the processor is further configured to perform the following step:
when the subscription information consistent with the unused local APN does not exist, selecting a group of subscription information that comprises an unused other APN from the other APN subscription information queue, to activate the PDP/PDN context.

33. The method according to claim 32, wherein the other APN subscription information queue comprises at least first other APN subscription information and second other APN subscription information, and a priority of the first other APN is higher than a priority of the second other APN; and
that the processor performs selecting a group of subscription information that comprises an unused other APN from the other APN subscription information queue, to activate the PDP/PDN context comprises:
querying whether the other APN in the first other APN subscription information exists in a list of used other APNs;
when finding that the other APN in the first other APN subscription information exists in the list of used other APNs, querying whether the other APN in the second other APN subscription information exists in the list of used other APNs;
when finding that the other APN in the second other APN subscription information does not exist in the list of used other APNs, selecting the second other APN subscription information as subscription information used to activate the PDP/PDN context;
activating the PDP/PDN context according to the second other APN subscription information; and
adding the other APN in the second other APN subscription information to the list of used other APNs.

34. The method according to claim 27, wherein that the processor performs obtaining at least one group of subscription information of a user comprises:
sending a subscription information request to a server; and
receiving at least two groups of subscription information of the user that are sent by the server, wherein a default APN in any subscription information in the at least two groups of subscription information of the user is different from a default APN in other subscription information.

35. The method according to claim 28, wherein the matching requirement comprises one or more of a PDP type or a PDP address;
after preferentially selecting the group of subscription information that comprises the unused default APN from the at least two groups of non-wildcard subscription information that meets the matching requirement, to activate the PDP/PDN context, the processor is further configured to perform the following step:
when the subscription information that comprises the unused default APN does not exist in the at least two groups of non-wildcard subscription information that meets matching requirement, selecting a piece of subscription information consistent with the unused local APN from the at least one group of subscription information of the user, to activate the PDP/PDN context; and
after selecting the piece of subscription information consistent with the unused local APN, to activate the PDP/PDN context, the processor is further configured to perform the following step:
when the subscription information consistent with the unused local APN does not exist, selecting a group of subscription information that comprises an unused other APN from the at least one group of subscription information of the user, to activate the PDP/PDN context.

36. The method according to claim 27, wherein the at least one local APN comprises at least a first local APN and a second local APN, and a priority of the first local APN is higher than a priority of the second local APN;
that the processor selects one unused local APN from at least one local APN comprises:
querying whether the first local APN exists in a second list of used local APNs;
when finding that the first local APN exists in the second list of used local APNs, querying whether the second local APN exists in the second list of used local APNs; and
when finding that the second local APN does not exist in the second list of used local APNs, preferentially selecting the second local APN as an APN used to activate the PDP/PDN context with reference to the wildcard subscription information; and
that the processor activates the PDP/PDN context with reference to the wildcard subscription information comprises:
activating the PDP/PDN context based on the second local APN with reference to the wildcard subscription information; and
adding the second local APN to the second list of used local APNs.

37. The method according to claim 28, wherein after obtaining the at least one group of subscription information of the user, the processor is further configured to perform the following steps:
when a unique group of non-wildcard subscription information that meets the matching requirement exists, determining whether an APN comprised in the unique group of non-wildcard subscription information that meets the matching requirement is used, and
if it is determined that the APN comprised in the unique group of non-wildcard subscription information that meets the matching requirement is used, preferentially selecting the group of subscription information that comprises the unused default APN from the at least one group of subscription information of the user, to activate the PDP/PDN context; and
when the subscription information that comprises the unused default APN does not exist in the at least one group of subscription information of the user, selecting a piece of subscription information consistent with the unused local APN from the at least one group of subscription information of the user, to activate the PDP/PDN context;
after selecting the piece of subscription information consistent with the unused local APN from the at least one group of subscription information of the user, to activate the PDP/PDN context, the processor is further configured to perform the following step:
when the subscription information consistent with the unused local APN does not exist in the at least one group of subscription information of the user, selecting a group of subscription information that comprises an unused other APN from the at least one group of subscription information of the user, to activate the PDP/PDN context; and
after selecting the group of subscription information that comprises the unused other APN from the at least one group of subscription information of the user, to activate the PDP/PDN context, the processor is further configured to perform the following step:
when the subscription information that comprises the unused other APN does not exist in the at least one group of subscription information of the user, activating the PDP/PDN context based on the unique group of non-wildcard subscription information that meets the matching requirement.

38. A server, comprising: an input apparatus, an output apparatus, a memory, and a processor, wherein the memory stores a group of program code, and the processor is configured to invoke the program code stored in the memory to perform the following operations:
receiving a subscription information request sent by a control node;
searching, according to the subscription information request, for at least two groups of subscription information of a user that are subscribed to by the user, wherein default access point names default APNs comprised in the at least two groups of subscription information of the user are different from each other; and
sending the at least two groups of subscription information of the user to the control node.

39. The method according to claim 38, wherein before receiving the subscription information request sent by the control node, the processor is further configured to perform the following steps:
receiving a subscription request of the user, wherein the subscription request carries specified information of at least two default APNs that are different from each other; and
generating the at least two groups of subscription information of the user according to the specified information, wherein a default APN in any subscription information in the at least two groups of subscription information of the user is different from a default APN in other subscription information.

40. A system, comprising a control node and a server, wherein the control node is the control node according to any one of claims 1 to 11, and the server is the server according to any one of claims 12 to 13.
